(19) Europäisches Patentamt
European Patent Office
Office européen des brevets

(11) Publication number: **0 305 033 B1**

(12) # EUROPEAN PATENT SPECIFICATION

(45) Date of publication of patent specification: **29.12.93**

(51) Int. Cl.[5]: **G11B 9/08**, G11B 9/00, G11C 11/21

(21) Application number: **88305862.0**

(22) Date of filing: **28.06.88**

Divisional application 93200794.1 filed on 28/06/88.

(54) **Recording device and reproducing device.**

(30) Priority: **31.07.87 JP 191862/87**
**31.07.87 JP 191863/87**

(43) Date of publication of application:
**01.03.89 Bulletin 89/09**

(45) Publication of the grant of the patent:
**29.12.93 Bulletin 93/52**

(84) Designated Contracting States:
**AT BE CH ES GR IT LI LU NL SE**

(56) References cited:
**EP-A- 0 049 076**
**EP-A- 0 174 860**
**EP-A- 0 186 813**
**EP-A- 0 247 219**
**GB-A- 2 051 456**
**US-A- 4 575 822**

**ELECTRONICS LETTERS, vol. 20, no. 20, 27 September 1984, pp. 838,839; N.J. Thomas et al.: "GaAs/LB film miss switching device"**

**THIN SOLID FILMS, vol. 99, 1983, pp. 277-281; G.L. Larkins et al.: "Langmuir-blodgett films as barrier layers in josephson tunnel junctions"**

(73) Proprietor: **CANON KABUSHIKI KAISHA**
**30-2, 3-chome, Shimomaruko,**
**Ohta-ku**
**Tokyo(JP)**

(72) Inventor: **Eguchi, Ken**
**7-20-201, Sakae-cho**
**1-chome**
**Atsugi-shi Kanagawa-ken(JP)**
Inventor: **Kawada, Haruki**
**3-8-201, Sakae-cho**
**2-chome**
**Atsugi-shi Kanagawa-ken(JP)**
Inventor: **Sakai, Kunihiro**
**1531-7, Shimotsuruma**
**Yamato-shi Kanagawa-ken(JP)**
Inventor: **Matsuda, Hiroshi**
**141-7-201, Sachigaoka**
**Asahi-ku**
**Yokohama-shi Kanagawa-ken(JP)**
Inventor: **Morikawa, Yuko**
**231-7, Kamihirama**
**Nakahara-ku**
**Kawasaki-shi Kanagawa-ken(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

**PHYSICAL REVIEW LETTERS, vol. 49, no. 1, 05 July 1982, pp. 57-61; G. Binning et al.: "Surface studies by scanning tunneling microscopy"**

Inventor: **Nakagiri, Takashi**
**18-2, Sendagi 3-chome**
**Bunkyo-ku Tokyo(JP)**
Inventor: **Hamamoto, Takashi**
**4-1104, Wakabadai 1-chome**
**Asahi-ku**
**Yokohama-shi Kanagawa-ken(JP)**
Inventor: **Kuribayashi, Masaki**
**639-11, Higashi Naganuma**
**Inagi-shi Tokyo(JP)**
Inventor: **Kawade, Hisaaki**
**6-29, Mizuhiki 2-chome**
**Atsugi-shi**
**Kanagawa-ken(JP)**
Inventor: **Yanagisawa, Yoshihiro**
**6-29, Mizuhiki 2-chome**
**Atsugi-shi Kanagawa-ken(JP)**

(74) Representative: **Beresford, Keith Denis Lewis et al**
**BERESFORD & Co.**
**2-5 Warwick Court**
**High Holborn**
**London WC1R 5DJ (GB)**

## Description

### BACKGROUND OF THE INVENTION

### Field of the Invention

This invention relates to a device for recording and/or reproducing information, to a reproducing device, and to a medium for storage of information to be recorded and/or reproduced.

### Related Background Art

In recent years, memory materials have formed the basis of electronic devices such as computers and related instruments, video discs and digital audio discs. Memory materials have been under active development. The performance required for memory materials differs depending upon the use to which the material is to be put, but may generally include:

(1) high density and large recording capacity;
(2) rapid speed of recording and reproduction;
(3) small power consumption; and
(4) ability to be produced rapidly and at low cost.

Up to now the predominant memory devices have been semiconductor memories or magnetic memories in which a semiconductor or a magnetic material is employed as the base material. With the development of lasers, inexpensive and high density recording media have emerged based on optical memory using an organic thin film such as an organic dye, or a photopolymer.

There has recently been developed a scanning type tunnel microscope (hereinafter abbreviated as STM) which is capable of observing directly the electron structure of the surface atoms of a conductor [G. Binning et al, Helveica Physica Acta, 55 , 726 (1982)]. With this microscope it has become possible to produce a real space image of both single crystalline and amorphous materials at high resolving power. The microscope has the advantage that observations can be made at low power consumption at which the medium is not damaged. Furthermore, the microscope works in air and can be used to examine a variety of materials, so that it finds a wide range of uses.

STM is based on the phenomenon that a tunnel current flows when a voltage is applied between a probe and an electroconductive substance, and the probe is caused to approach to a distance of about 1 nm from that substance. This current is very sensitive to the distance between the probe and the electroconductive substance, and by scanning the probe so that the tunnel current is maintained at a constant value, a drawing can be produced of the surface structure in real space and at the same time a variety of information can be read concerning the total electron cloud of the surface atoms. Although analysis by the use of STM is limited to electroconductive materials, its use for analysing the structure of a monomolecular film formed on the surface of an electroconductive material has been proposed [see H. Fuchs et al, Surface Science, 8(1987) 391-393].

An electostatic recording method is also known in which a latent image is formed by a current from a needle-like electrode, and a large number of applications using recording paper have been suggested (Japanese laid open patent publication no. 3435-1974) The film thickness used in this electrostatic recording medium is in the order of microns, and there has been no exemplification of electrically reading or reproducing the latent image.

Molecular electronic devices have also been proposed in which a single organic molecule functions as a logic element or memory element. There has been considerable study of Langmuir-Blodgett films (hereinafter abbreviated as LB film) which can be regarded as one of the constructional elements of a molecular electronic device. A Langmuir-Blodgett film has organic molecules laminated regularly one molecular layer on another, and the film thickness can be adjusted in units of molecular length, so that uniform and homogenous ultra-thin films can be formed. Many attempts have been made to use LB films as the insulating film in devices using this feature, for example tunnel junction elements of a metal-insulator-metal (MIM) structure have been disclosed [G.L. Larkins et al, Thin Solid Films, 99 (1983)], an electroluminescent element having a metal-insulator-semiconductor (MIS) structure [G.G. Roberts et al, Electronics Letters, 20 , 489 (1984)] or a switching element [N.J. Thomas et al, Electronics Letters 20 , 838 (1984)] have been proposed. In these studies, the characteristics of the device have been studied, but there remain unsolved problems concerning reproducibility and stability, for example, a variance or change over time in the characteristics of the elements.

Most previous investigations have been carried out using LB films of fatty acids which can be handled with relative ease. However, these materials exhibit poor heat resistance and mechanical strength. We have investigated organic materials having better heat resistance and mechanical strength and have made a MIM element which exhibits good reproducibility and stability using LB films as the insulator, and we have successively prepared a thin uniform dye-based insulating film not found in the prior art. As a result of this work we have discovered a MIM element which can be switched and which exhibits an entirely novel memory function.

U.S. patent no. 4575822 discloses a data memory device comprising a substrate having a major surface, means for selectively forming perturbations in the surface and a probe which detects the presence of such perturbations. A tunnel electron current flows between the surface and the conductive probe, and the surface has a pair of layers, with the perturbations being established as accumulations of electrical charge at the interface between the layers which gives rise to a change in tunnel current as between charged and non-charged regions.

In one aspect the invention provides a device for recording and/or reproducing information comprising a probe electrode, a recording medium opposite to the probe electrode and either one or both of (a) means for applying a writing voltage between the probe electrode and the medium to record information thereon and (b) means for applying a reading voltage between the probe electrode and the medium to detect information recorded thereon, characterised in that the medium can undergo a transition from a first state to a second state which has a distinct and different electrical conductivity from that of the first state and in that the transition can be induced by the writing voltage and/or that the difference in state can be detected by the reading voltage.

In a further aspect the invention relates to the use of a device as aforesaid to record information by causing a tunnel current to flow between the probe electrode and the recording medium.

In a yet further aspect the invention relates to the use of a device as aforesaid to reproduce information by causing a tunnel current to flow between the probe electrode and the recording medium.

In a yet further aspect of the invention there is provided a reproducing device, comprising a probe electrode, a recording medium written by an energy beam irradiation, the said medium being capable of undergoing a transition between at least two states which have distinct and different electrical conductivities, means or applying a voltage onto said recording medium from said probe electrode and means for reading the current flowing through said recording medium.

In a further aspect there is provided a device comprising a probe electrode and a recording medium opposite to the probe electrode so that a writing or reading voltage can be applied there between, characterised in that the medium exhibits a transition from a first state to a second state of different electrical conductivity from the first state.

In a yet further aspect there is provided a medium for storage of information to be recorded and/or reproduced by a probe electrode, characterised in that the medium exhibits a transition from a first state to a second state of different electrical conductivity which transition can be induced by a writing voltage or detected by a reading voltage.

Various embodiments will now be described, by way of example only, with reference to the accompanying drawings in which Figures 4, 5 and 6 are present for reference purposes only:

Fig. 1 illustrates diagramatically the current passage recording and reproducing device of the present invention.

Fig. 2 illustrates the characteristic curve of the current passed when 1 V is applied on the probe electrode when the distance between the probe electrode and the sample (recording layer) is varied.

Fig. 3 illustrates the pulse voltage waveform for recording.

Fig. 4 is a schematic illustration of MIM device.

Figs. 5 and 6 are characteristic graphs showing electrical characteristics obtained in the device shown in Fig. 4.

Fig. 7 is a schematic illustration of the device for forming built-up film.

Figs. 8A and 8B are schematic illustrations of a monomolecular film.

Figs. 9A to 9C are schematic illustrations of a built-up film.

Fig. 10A illustrates diagramatically the current passage recording and reproducing device of the present invention.

Fig. 10B is a perspective view of a substrate on which a plural number of probes were provided, and Fig. 10C is a side view thereof.

Fig. 10D illustrates diagramatically another current passage recording and reproducing device of the present invention.

Fig. 10E is a perspective view of a substrate on which a plural number of probes are provided, and Fig. 10F is a side view thereof.

Figs. 11A to 11C illustrate schematically the track and the recorded state of data in the recording medium.

Fig. 12A is a schematic illustration of the recording pattern used in the present invention, and

Fig. 12B is an enlarged view of the line pattern recorded within each lattice.

One form of the recording medium of the invention employs an organic film laminated on an electrode, the film being built up from molecules in which there are groups having $\pi$-electron levels and groups having only $\sigma$-electron levels. When a current is caused to flow between the film and a probe electrode spaced from and directed towards the surface of the film, such a recording medium can exhibit a non-linear current-voltage characteristic different from the prior art. Since most organic materials generally exhibit insulating or semi-insulating properties, a remarkable variety of organic material can be used.

As the structure of the dye having a $\pi$-electron system suitable for the present invention, there may be included, for example, dyes having porphyrine skeleton such as phthalocyanine, tetraphenylporphyrine, etc.; azulene type dyes having squarilium group and croconic methine group as the bonding chain and cyanine-like dyes having two or more nitrogen-containing heterocyclic rings such as quinoline, benzothiazole, benzoxazole, etc. bonded through squarilium group and croconic methine group; or cyanine dyes, condensed polycyclic aromatic compounds such as anthracene and pyrene, and chain compounds obtained by polymerization of aromatic ring and heterocyclic compounds; and polymers of diacetylene group; further derivatives of tetraquinodimethane or tetrathiafluvalene and analogues thereof and charge transfer complexes thereof; and further metal complex compounds such as ferrocene, tris-bipyridine ruthenium complexes, etc.

Concerning formation of an organic recording medium, although the vapor deposition method or the cluster ion beam method may be applicable, an LB method is extremely suitable among the known techniques because of controllability, easiness and reproducibility.

According to the LB method, a monomolecular film of an organic compound having a hydrophobic site and a hydrophilic site in one molecule or a built-up film thereof can be formed easily on a substrate, which has a thickness on the molecular order and a uniform and homogeneous organic ultra-thin film can be supplied stably over a large area.

The LB method is a method in which a monomolecular film or its built-up film is prepared by utilizing the phenomenon that, in a molecule with a structure having a hydrophilic site and a hydrophobic site in a molecule, when the balance of the both (amphiphilic balance) is brought to a proper value, the molecule will form a layer of monomolecule on the water surface with the hydrophilic group directed downward.

Examples of the group constituting the hydrophobic site may include various hydrophobic groups generally known widely such as saturated and unsaturated hydrocarbon groups, condensed polycyclic aromatic groups and chain polycyclic phenyl groups, etc. These may constitute the hydrophobic moiety each individually or as a combination of a plurality thereof. On the other hand, most representative as the constituent of the hydrophilic moiety are, for example, hydrophilic groups such as carboxyl group, ester group, acid amide group, imide group, hydroxyl group, further amino groups (primary, secondary, tertiary, and quaternary), etc. These also constitute the hydrophilic moiety of the above molecule each individually or as a combination of a plurality thereof.

A dye molecule having these hydrophobic group and hydrophilic group in a well-balanced state and having $\pi$-electron system having an appropriate size can form a monomolecular film on the water surface, and it can be an extremely suitable material for the present invention.

Specific examples may include the molecules as shown below.

[I] Croconic methine dyes:

1)

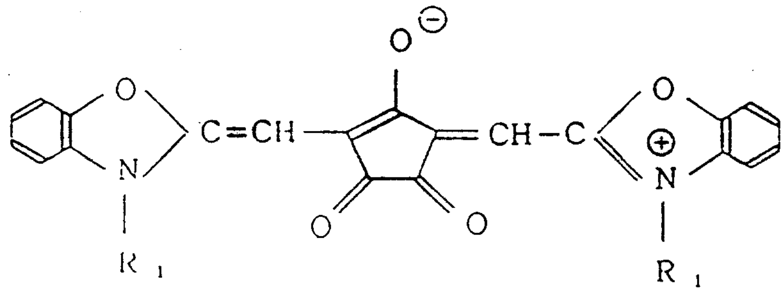

2)

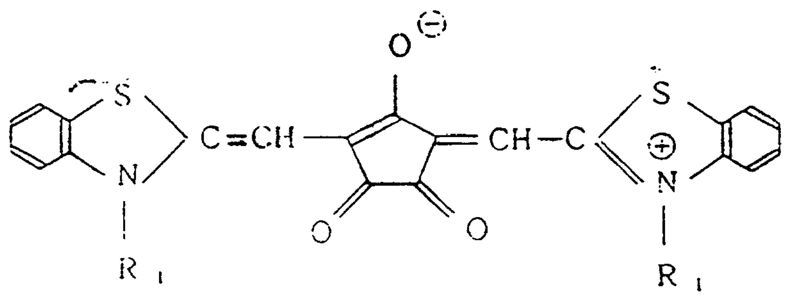

3)

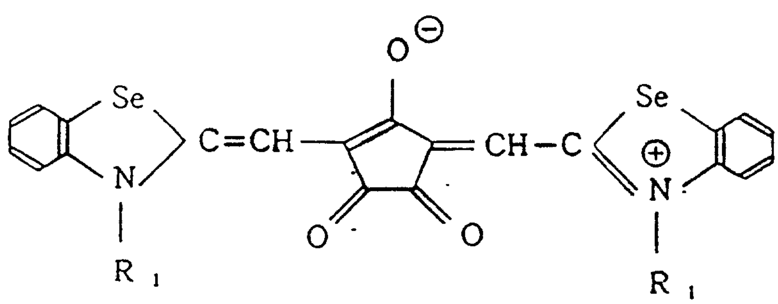

4)

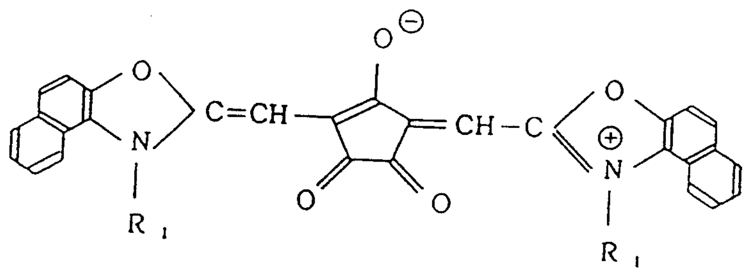

5)

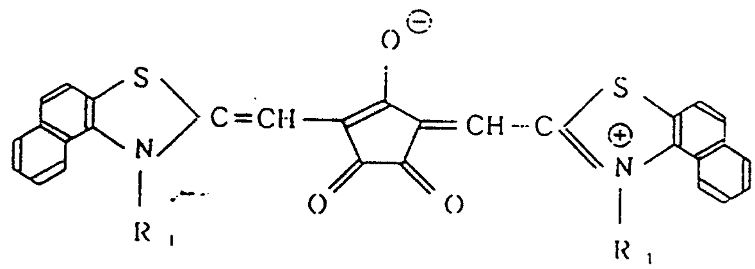

6)

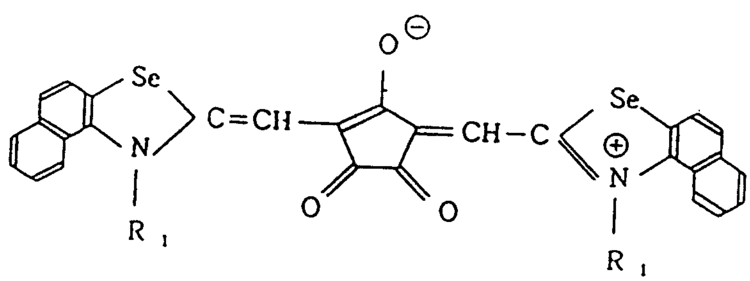

7)

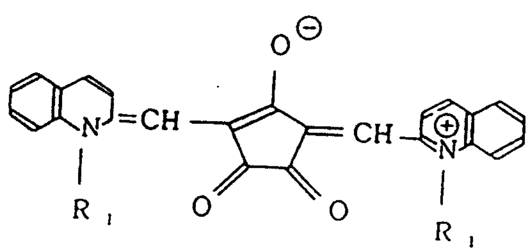

8)

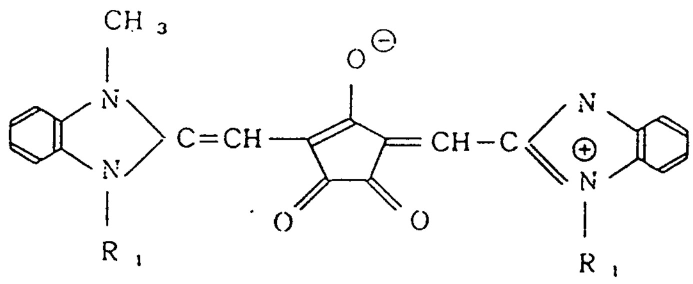

9)

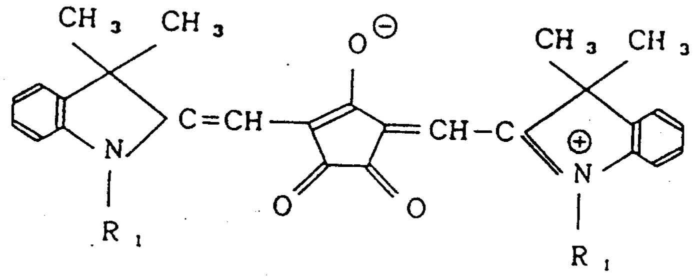

10)

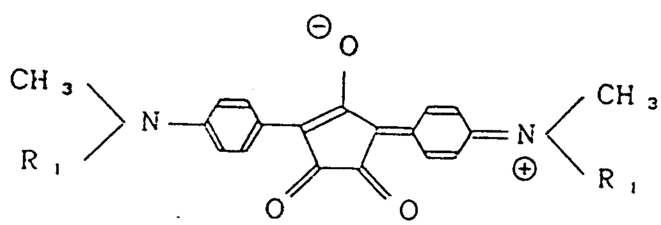

11)

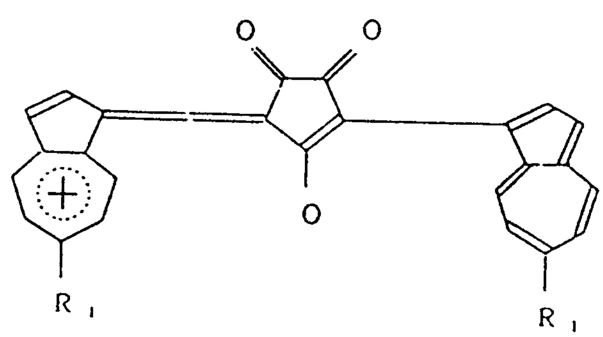

wherein $R_1$ corresponds to the group having $\sigma$-electron level as mentioned above, and may be preferably a long chain alkyl group introduced with the carbon number n being $5 \leqq n \leqq 30$ for making easier formation of the monomolecular film on the water surface. The compounds mentioned above as specific examples show only the basic structures, and various derivatives of these compounds are also suitable in the present

invention, as a matter of course.

[II] Squarilium dyes:

Compounds mentioned in [I] in which the croconic methine groups are replaced with the squarilium group having the following structure:

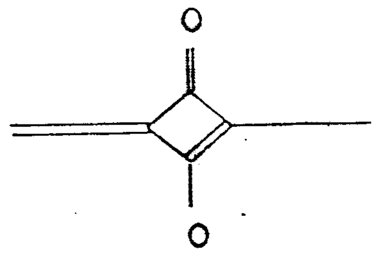

[III] Porphyrine type dye compounds:

1)

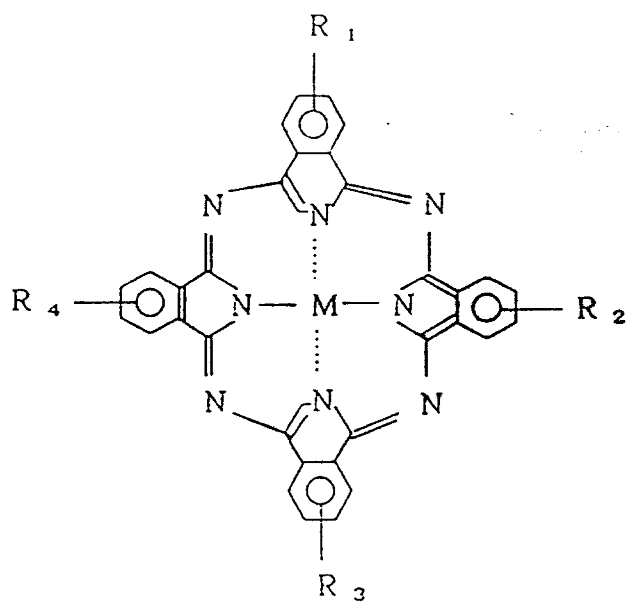

$R_1, R_2, R_3, R_4$ = II,

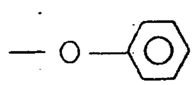

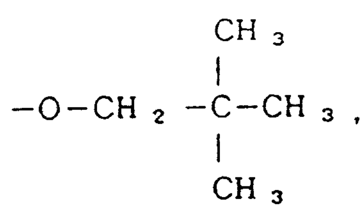

$-OC_5H_{11}$,
$-C(CH_3)_3$,

$-CH_2NHC_3H_7$
M = $H_2$, Cu, Ni, Al-Cl and rear earth metal ion
2)

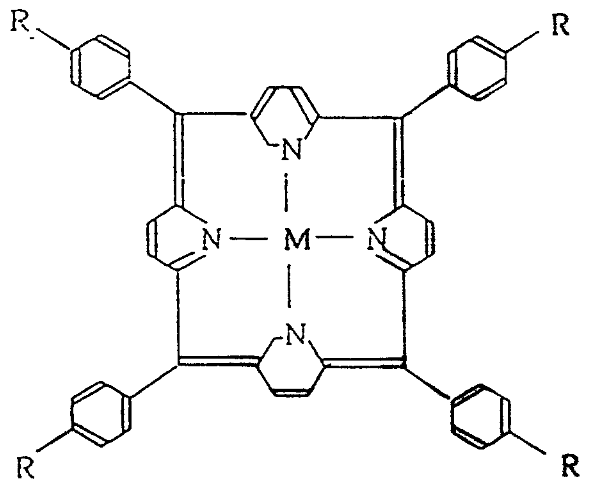

R = $OCH(COOH)C_nH_{2n+1}$
$5 \leqq n \leqq 25$
M = $H_2$, Cu, Ni, Zn, Al-C and rear earth metal ion
3)

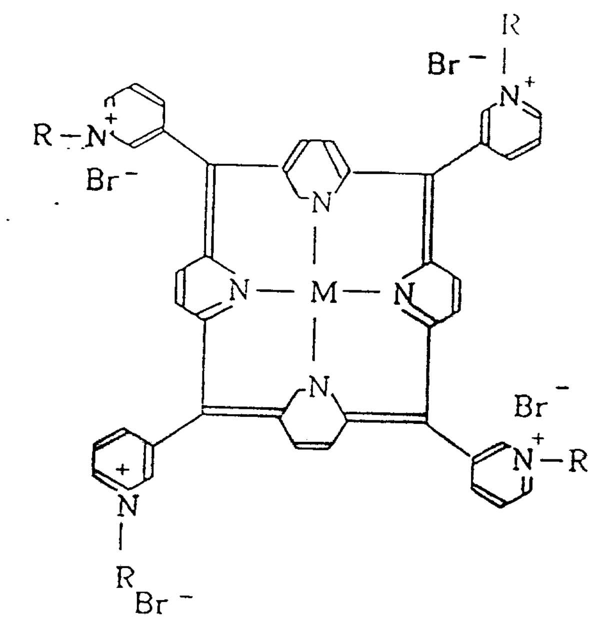

R = $C_nH_{2n+1}$ $5 \leqq n \leqq 25$
M = $H_2$, Cu, Ni, Zn, Al-Cl and rear earth metal ion

R is introduced for making easier formation of the monomolecular film, and is not limited to the substituents mentioned here. On the other hand, $R_1$ -$R_4$ correspond to the group having $\sigma$-electron level as mentioned above.

[IV] Condensed polycyclic aromatic compounds:

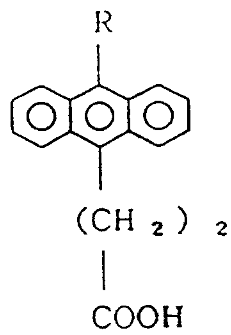

$R = C_4H_9 \sim C_{12}H_{25}$

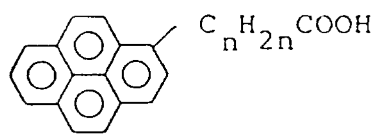

σ≦N≦20

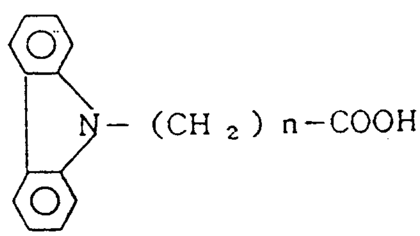

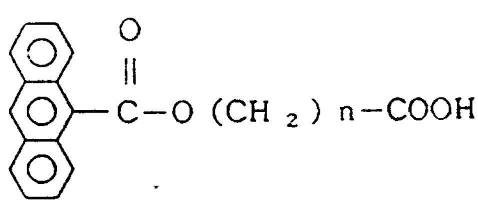

[V] Diacetylene compounds:

$CH_3(CH_2)_n C\equiv C\text{-}C\equiv C(CH_2)_m X$
$0 \leqq n, m \leqq 20$

(with proviso n + m > 10)
X is a hydrophillc group, and generally -COOH is used, but -OH, $-CONH_2$, etc. can be also used.

[VI] Others:

1)

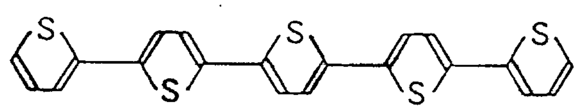

Quinquethienyl

2)

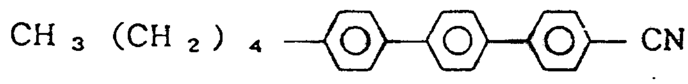

3)

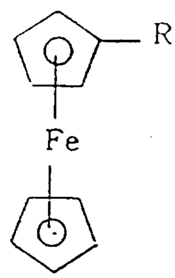

R = $CONHC_{18}H_{37}$,
$OCOC_{17}H_{35}$

4)

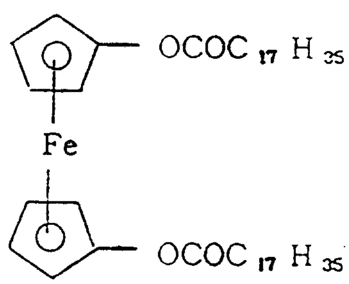

5)

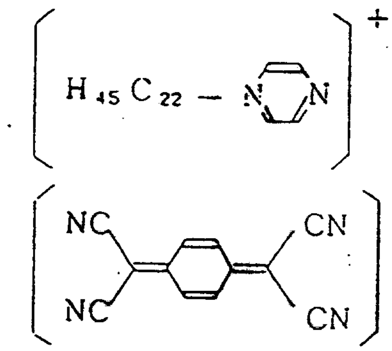

6)

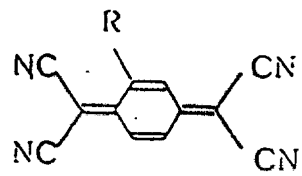

$R = C_{18}H_{37}$

Dye materials suitable for the LB method other than those as mentioned above are of course suitable for the present invention. For example, biological materials of which study is becoming popular (e.g. bacteriorhodopsin or cytochrome c) or synthetic polypeptides (PBLG, etc.) and others may be also applicable.

Amphiphilic molecule can form a monomolecular film with the hydrophilic groups directed downward. The monomolecular layer on the water surface has the characteristics of the two-dimensional system. When the molecules are scattered sparsely, the following formula of the two-dimensional ideal gas is valid between the area per one molecule A and the surface pressure :

$$\pi A = kT,$$

thus becoming "gas film". Here, k is the Boltzmann's constant and T is an absolute temperature. When A is made sufficiently small, intermolecular interactions are strengthened, whereby the molecules become a "condensed film (or solid film)"which acts like a two-dimensional solid. The condensed film can be transferred, one layer by one layer, onto the surface of any desired body having various materials and shapes such as glass or resin. By use of this method, a monomolecular film or built-up films thereof can be prepared, and used as the recording layer.

As a specific preparation method, the following method may be employed.

A desired organic compound is dissolved in a solvent such as chloroform, benzene, acetonitrile, etc. Next, such solution is spread on an aqueous phase 81 by means of an appropriate device as shown in Fig. 7 in the accompanying drawings to form a layer or film 82 of the organic compound. Subsequently, a partitioning plate (or a float) 83 is provided to prevent too broad expansion of the spreading layer 82 through free diffusion on the aqueous phase 81, whereby the spreading area of the spreading film 82 is restricted to control the gathered state of the film substance and obtain a surface pressure $\pi$ in proportion to the gathered state. By moving this partitioning plate 83, the gathered state of the film substance can be controlled by reducing the spreading area, whereby the surface pressure can be gradually elevated to be set at a surface pressure suitable for preparation of the film. With the surface pressure kept constant, by moving vertically a clean substrate 84 gently, a monomolecular film of an organic compound is transferred onto the substrate 84. Such monomolecular film 91 is a film having molecules orderly arranged as shown in Fig. 8A or 8B.

The monomolecular film 91 can be thus produced, and a built-up film with desired built-up number can be formed by repeating the above operation. For transfer of the monomolecular film 91 onto the substrate 84, other than the above vertical dipping method, such methods as the horizontal lifting method, the rotating cylinder method, etc., may be employed. The horizontal lifting method is a method in which transfer is effected with the substrate being contacted horizontally on the water surface, and the rotating cylinder method is a method in which the monomolecular layer is transferred onto the substrate surface by rotating a cylindrical substrate on the water surface.

In the vertical dipping method as described above, when a substrate having a hydrophilic surface is withdrawn in the direction transversing the water surface, a monomolecular film 91 of the organic compound with the hydrophilic sites 92 of the organic compound directed toward the substrate 84 side is formed on the substrate 84 (Fig. 8B). When the substrate 84 is moved vertically, monomolecular films 91 are laminated one layer by one layer in the respective steps to form a built-up film 101. Since the direction of the film forming molecules in the withdrawing step becomes opposite to that of the dipping step, there is formed a Y type film according to this method in which the hydrophobic sites 93a and 93b of the organic compound are faced to each other between the respective layers (Fig. 9A). In contrast, in the horizontal lifting method, the monomolecular film 91 is formed on the substrate 84 with the hydrophobic site 93 of the organic compound faced toward the substrate 84 side (Fig. 8A). According to this method, even when the monomolecular film 91 may be built up, there is no change in direction of the film forming molecules, but there is formed an X type film in which the hydrophobic sites 93a and 93b are faced toward the substrate side in all of the layers (Fig. 9B). On the contrary, a built-up film 101 in which the hydrophilic sites 92a and 92b are faced toward the substrate 84 side is called a Z type film (Fig. 9C).

The method for transferring the monomolecular film 91 onto a substrate 84 is not limited to the above methods, but it is also possible to employ a method in which a substrate is extruded into an aqueous phase from a roll, when employing a large area substrate. The direction of the hydrophilic groups and the hydrophobic groups toward the substrate as described above are given as a general rule, and it can also be modified by the surface treatment of the substrate, etc.

As described above, a potential barrier layer comprising the monomolecular film 91 of an organic compound or its built-up film is formed on the substrate 84.

In the present invention, the substrate 84 for supporting the thin film comprising a lamination of the inorganic material and organic material may be any of metal, glass, ceramics, plastic materials, etc., and further a biological material with remarkably lower heat resistance can also be used.

The substrate 84 as described above may be in any desired shape, preferably in a flat plate, which is not limitative of the present invention at all. This is because the above film forming method has such advantage that the film can be formed exactly in accordance with the shape of the substrate surface independently of the shape of the substrate surface.

In another specific example of the present invention, it is possible to utilize the phenomenon that tunnel current flows when the probe of a metal and an electroconductive substance are brought close to each other to a distance of about 1 nm with application of a voltage therebetween. This tunnel current depends on the work function on the surface, and therefore information regarding various surface electron states can be read.

The method by use of tunnel current has a number of advantages such that it requires no vacuum condition, is applicable to both single crystalline and amorphous materials, has high resolving power, and yet reproduction at low power is possible without giving damage by the current.

Further, since tunnel current is of a magnitude on the order of about nA, the recording medium may be one having a conductivity of $10^{-10}$ $(ohm.cm)^{-1}$ or higher, preferably $10^{-8}$ $(ohm.cm)^{-1}$ or higher.

As the recording medium to be used in the present invention, materials exhibiting the memory switching phenomenon in current-voltage characteristic can be utilized. For example, there may be included (1) amorphous semiconductors such as oxide glass, borate glass or chalcogenide glass containing Se, Te, as compounded with the element of the group III, IV, V or VI of the periodic table, etc. They are intrinsic semiconductors having an optical band gap Eg of 0.6 to 1.4 eV or an electrical activation energy $\Delta E$ of approximately 0.7 to 1.6 eV. Specific examples of chalcogenide glass may include A-Se-Te type, Ge-As-Se type, Si-Ge-As-Te type, for example, $Si_{16}Ge_{14}As_5Te_{65}$ (the subscripts show atomic%), or Ge-Te-X type, Si-Te-X type (X = represents small amount of group V, and VI elements), for example $Ge_{15}Te_{81}Sb_2S_2$.

Further, a chalcogenide glass of Ge-Sb-Se type may be also used.

In the amorphous semiconductor layer comprising the above compound deposited on the electrode, by applying a voltage in the direction vertical to the film surface by use of a probe electrode, the electric memory effect of the medium can be exhibited.

As the method for depositing such material, the object of the present invention can be sufficiently accomplished according to the thin-film-forming technique known in the art. For example, suitable film-forming methods may include the vacuum vapor deposition method, the cluster ion beam method, etc. Generally speaking, the electric memory effect of such material is observed at a film thickness of several µm or less, and concerning recording resolving power as the recording medium, the thickness may be preferably thinner. However, with respect to uniformity and recording characteristic, a film thickness is preferably 100 Å to 1 µm more preferably a thickness of 1000 Å or less.

Further, there may be included (2) organic semiconductor layers having deposited a salt of an electron accepting compound such as tetraquinodimethane (TCNQ), TCNQ derivatives, for example, tetrafluorotetracyanoquinodimethane ($TCNQF_4$), tetracyanoethylene (TCNE) and tetracyanonaphthoquinodimethane (TNAP), etc. with a metal having relatively lower reduction potential such as copper or silver on the electrode.

As the method for forming much organic semiconductor layer, there may be employed the method in which the above electron accepting compound is vacuum vapor deposited on the electrode of copper or silver.

The electric memory effect of such organic semiconductor is observed at a film thickness of several ten µm or less, but a film thickness of 100 Å to 1 µm is preferred with respect to film forming property and uniformity.

Further, there may be employed (3) recording medium using amorphous silicon as the material. For example, it is a recording medium having a layer constitution of metal/a-Si ($p^+$ layer/n layer/i layer) or metal/a-Si ($n^+$ layer/p layer/i layer), and the respective layers of a-Si can be deposited satisfactorily according to the methods known in the art. In the present invention, the glow discharge method (GD) may be preferably employed. The film thickness of a-Si may be preferably 2000 Å to 8000 Å for the n layer, about 1000 Å for the $p^+$ layer, with the total film thickness being preferably about 0.5 µm to 1 µm.

On the other hand, the electrode material to be used in the present invention may be one having high conductivity, including a large number of materials, typically metals such as Au, Pt, Ag, Pd, Al, In, Sn, Pb, W, etc. and alloys of these, further graphite or silicide, and further electroconductive oxides such as ITO, and application of these materials for the present invention may be contemplated. The method for forming electrodes by use of such material may be sufficiently the known thin film forming technique. However, as the electrode material to be formed directly on the substrate, it is preferable to use an electroconductive material of which the surface will not form an insulating oxide film during formation of an LB film, for example a noble metal or an oxide conductor such as ITO.

The metal electrode of the recording medium is required if the recording layer in the present invention is insulating, but no such metal electrode is required if said recording layer exhibits semiconductive properties of MΩ or less. Thus, the recording layer itself can be used as the counter-electrode of the probe electrode.

Also, the tip of the probe electrode is required to be pointed so far as possible in order to enhance resolving power of recording/reproduction/erasing. In the present invention, a platinum with a thickness of 1 mm in diameter with a tip mechanically ground to a cone of 90°, which is subjected to evaporation of the surface atoms by applying an electrical field in ultra-high vacuum, is employed, but the shape of the probe and the treating method are not limited thereto.

By use of the materials and the method as described above, a device with MIM structure as shown in Fig. 4 was prepared, whereby a memory switching device exhibiting the current-voltage characteristics as shown in Fig. 5 and Fig. 6 was obtained, and the two states (ON state and OFF state) were already found to have respective memory characteristics. These memory switching characteristics appear at the layer thickness of several Å to several 1000 Å, but the recording medium used with the probe electrode of the present invention should preferably have a layer thickness in the range of several Å to 500 Å, most preferably a layer thickness of 10 Å to 200 Å.

In Fig. 4, 84 represents a substrate, 41 an Au electrode, 42 an Al electrode and 43 a built-up monomolecular film as described above.

Fig. 1 is a block constituting diagram showing the recording device of the present invention. In Fig. 1, 105 is a probe current amplifier, 106 a servo circuit for controlling the fine mechanism 107 by use of a piezoelectric element so that the probe current may become constant. 108 is a power source for applying a pulse voltage for recording/erasing between the probe electrode 102 and the electrode 103.

When a pulse voltage is applied, the probe current will be abruptly changed and therefore the servo circuit 106 controls the HOLD circuit to be set ON so that the output voltage may be kept constant during that period.

109 is an XY scanning driving circuit for movement control of the probe electrode in the XY direction. 110 and 111 are used for coarse control of the distance between the probe electrode 102 and the recording medium 1 so that a probe current of about $10^{-9}$ A may be obtained. These respective instruments are under the central control by means of a microcomputer 112. Also, 113 has a display instrument.

The mechanical performances in the movement control by use of a piezoelectric element are shown below.

| | |
|---|---|
| Fine control range in Z direction: | 0.1 nm - 1 µm |
| Coarse control range in Z direction: | 10 nm - 10 mm |
| Scanning range in XY direction: | 0.1 nm - 1 µm |
| Measurement, control tolerable error: | <0.1 nm. |

Fig. 10A is a block constituting diagram showing another recording device of the present invention. In Fig. 10A, 1005 is a probe current amplifier, and 1006 is a servo circuit for controlling the fine mechanism 1007 by use of a piezoelectric element so that the probe current may become constant. 1008 is a power source for applying a pulse voltage for recording/erasing between the probe electrodes 1002a, b, c and the electrode 1003.

When a pulse voltage is applied, the probe current will be abruptly changed, and therefore the servo circuit 1006 controls the HOLD circuit to be set ON so that the output voltage may be kept constant during that period.

1009 is an XY scanning driving circuit for movement control of the probe electrodes 1002a, b, c in the XY direction. 1010 and 1011 are used for coarse control of the distance between the probe electrodes 1002a, b, c and the recording medium 1 so that a probe current of about 10-9 A may be previously obtained. These respective instruments are all under central control by means of a microcomputer 1012. 1013 represents a display instrument, and 1015 a wiring.

Also, the mechanical performances in the movement control by use of a piezoelectric element are shown below.

| | |
|---|---|
| Fine control range in Z direction: | 0.1 nm - 1 µm |
| Coarse control range in Z direction: | 10 nm - 10 mm |
| Scanning range in XY direction: | 0.1 nm - 1 µm |
| Measurement, control tolerable error: | <0.1 nm. |

Fig. 10D is another preferable example of the present invention, showing a block diagram of the device having a large number of probe electrodes 1002 provided, Fig. 10E showing a perspective view of an embodiment in which a number of probe electrodes 1002 are provided on the $SiO_2$ substrate and Fig. 10F showing a side view thereof.

The probe electrodes shown in Figs. 10D - 10E can be prepared in a large number by implanting silicon onto the $SiO_2$ plate by focus-ion beam and permitting tungsten to grow selectively on the silicon. In the device shown in Fig. 10D, in place of the servo circuit 1006 used in the device shown in Fig. 10A, an A/D transducer 1016 for converting analog signals obtained to digital signals can be used.

In another preferable example of the present invention, a high density record written by use of an energy beam such as a particle beam (an electron beam, or an ion beam) or a higher energy electromagnetic wave ray such as an X-ray, etc. and visible light, an UV-ray or a laser beam, etc. can be electrically reproduced by use of a probe electrode. As a reproducing device, the device shown in Fig. 1 and Fig. 10 can be used. In this case, the recording medium 1 to be used is constituted of a substrate electrode 103 and a recording layer 101 formed thereon.

As the recording layer 101 mentioned above, an inorganic or organic semiconductive substance can be used.

For example, inorganic semiconductors may include semiconductive substances containing the element selected from the group IVB of the long period type periodic table (C, Si, Ge), semiconductive substances containing the element selected from the group IIIB (Ga) and the element selected from the group VB (As, P) or semiconductive substances containing the element selected from the group IIB (Zn, Cd) and the element selected from the group VIB (O, S, Se). Specifically, there may be employed a large number of materials, including typically semiconductors such as Si (single crystalline, polysilicon, amorphous), Ge, GaAs, GaP, InAs, InP or CdS, CdSe, ZnO, ZnS, etc. On the other hand, organic semiconductors may include a large number of organic semiconductors, for example, aromatic polycyclic compounds such as phthalocyanine and derivatives thereof, pyrene, perylene, etc. and derivatives thereof; polymeric compounds having conjugated $\pi$ bond such as polyacetylene, polydiacetylene derivatives, etc.; further electrolytic polymerized films such as of pyrrole, thiophene, etc.; or polyvinyl carbazole, tetraquinodimethane, docosylpyridinium, tetraquinodimethane charge transfer complexes, etc.

These semiconductor substances can be formed in conventional manner into thin films. For example, for film formation of an inorganic semiconductor, there can be employed the vacuum vapor deposition method, the sputtering method, the glow discharge method, etc., while for film formation of an organic semiconductor, the vacuum vapor deposition method such as the cluster ion beam method or the electrolytic polymerization method may be available. Also, film formation can be effected by coating of a coating liquid having a semiconductive substance dispersed in an appropriate resin (e.g. polystyrene, polyacrylonitrile, polycarbonate, polyester, etc. according to a conventional method (roll coating, dip coating, etc.).

Also, in another specific example of the present invention, during formation of the recording layer 101, a Langmuir-Blodgett method (an LB method) proposed by Langmuir et al as described above is applicable. As the general structure of molecule to be used in the present invention, the molecules as shown below may be included.

(1) Molecules with the site bearing desired function, namely the functional moiety (e.g. $\pi$ electron system) having at the same time strong hydrophilic property (or strong hydrophobic property) in combination, for example, copper phthalocyanine, pyrene, triphenylmethane, etc., or molecules with such functional moiety exhibiting polymerizability, for example, diacetylene derivatives, polyimide, etc.

(2) Molecules with the functional moiety having not particularly hydrophilic property or hydrophobic property and having hydrophilic sites and hydrophobic sites formed within the molecule by introducing hydrophilic groups, and hydrophobic groups as described above, including, for example:

a) those having functional moieties arranged on the side of hydrophilic sites, for example, long chain alkyl-substituted melocyanine dyes having photoconductivity, etc.;

b) those having functional moieties arranged on the side of hydrophobic sites, for example, pyrene having long chain alkylcarboxylic acid bonded thereto;

c) those having functional moieties arranged around the center, namely in the middle of the hydrophobic sites and the hydrophilic sites, for example, anthracene derivatives, diazo dyes, etc.

d) those having no functional moiety, but constituting of only hydrophobic sites and hydrophilic sites, for example, stearic acid, arachidic acid, etc. substituted with long chain saturated fatty acid.

Other materials suitable for the LB method than those mentioned above are of course suitable for the present invention. For example, biological materials of which studies have been comprehensively made in recent years (e.g. polypeptides such as bacteriorhodopsin or cytochrome c) or synthetic polypeptides (PBLG, etc.) may be also applicable.

A potential barrier layer comprising a monomolecular film of much organic compound or its built-up film is formed on the substrate.

In the present invention, the substrate for supporting the thin film comprising a laminate of inorganic and organic materials as described above may be any of metal, glass, ceramics, plastic materials, etc., and further a biological material with remarkably lower heat resistance can be also used.

The substrate as mentioned above may have any desired shape, preferably a flat plate shape, but the shape is not limited to a flat plate at all. Thus, in the above film forming method, irrespectively of whether the substrate may have any surface shape, there is the advantage that the film can be formed exactly the same as its shape.

The recording layer 101 can be recorded with various energy beams as described below, and the recorded image can be reproduced by means of the reproducing means as described above. In the following, specific examples of the recording method are shown.

1) A method in which a high energy particle beam such as electron beam, ion beam is irradiated on the LB film as described above. By irradiation of a high energy particle beam onto an LB film, there occurs physical change in the film structure of the LB film itself, whereby the change in the film thickness of the LB film is caused to occur.

2) A method in which an ion beam, visible light or an UV-ray is irradiated onto the semiconductor thin film, whereby the change in electroconductivity is caused to occur at the irradiated portion.

3) A method in which an electron beam is irradiated onto a thin film of a metal phthalocyanine (copper phthalocyanine, nickel phthalocyanine, lead phthalocyanine, etc.), thereby causing the oxidation-reduction reaction of the metal phthalocynine at the irradiated portion to occur, to cause change in the film structure.

4) A method in which change in electron state accompanied with polymerization by electron beam, X-ray or UV-ray irradiation is caused to occur. The monomers to be used in this case may include the following:

ⓐ $R_1 \leftarrow\!\!\!\!( CH_2 )\!\!\!\!\rightarrow_n X\text{-}R_2$ $10 \leqq n \leqq 25$

X = -COO-, -CONH-, -OCO-

$R_1$ = $-CH_3$, $-CH=CH_2$
$R_2$ = -H, $-CH=CH_2$, $-C(CH_3)=CH_2$. $-CH_2CH=CH_2$
(with proviso that $R_2$ cannot be -H where $R_1$ is $-CH_3$)
ⓑ $H(CH_2)_n C{\equiv}CC-C{\equiv}C(CH_2)_m X-R_2$ $0 \leq m, n, 10 \leq m+n \leq 25$
X = -COO, -CONH-, -OCO-
$R_2$ = -H, $-CH=CH_2$, $-C(CH_3)=CH_2$, $-CH_2CH=CH_2$

5) The method in which direct recording is effected through change in conformation or configuration of the compound by irradiation of visible light or UV-ray. For example, there may be employed:

a) spiropyrane, fulgide or azobenzene derivatives having photochromic property;

b) dyes in which the associated state is changed, for example, melocyanine compounds, cyanine compound, or squarilium and croconic methine compounds, particularly azulene type compounds.

The thin film structure change of an LB film, etc. as mentioned here may sometimes occur alone, but in many cases some effects will generally occur associatedly.

As the electrode for laminating a thin film such as an LB film, etc. as described above, all conductors having conductivity of 10-6 (ohm.cm)-1 or higher can be used. More specifically, with the use of a metal plate such as Au, Pt, Pd, Ag, Al, or a glass, ceramics, plastic materials having these metals vapor deposited thereon, or semiconductors such as Si (crystalline, amorphous) as the substrate, a thin film such as LB film can be laminated thereon and used as the recording medium.

## Example 1

A recording/reproducing device shown in Fig. 1 was employed. As the probe electrode 102, a probe electrode made of platinum was used. This probe electrode 102 is used for controlling the distance (Z) from the surface of the recording layer 101, and its distance (Z) is finely controlled by a piezoelectric element so that the current may be controlled to be constant. Further, the fine control mechanism 107 is designed so that fine movement control may be possible also in the plane (X,Y) direction. However, all of these are known techniques. Also, the probe electrode 102 can be used for direct recording, reproduction and erasing. The recording medium is placed on the XY stage 114 with high precision and can be moved to any desired position.

Next, the experiments of recording, reproduction and erasing by use of an LB film (8 layers) of squarilium-bis-6-octylazulene (hereinafter abbreviated as SOAZ) formed on the electrode 103 formed of Au are described in detail.

A recording medium 1 having a recording layer with 8 built-up SOAZ layers was placed on the XY stage 114, and first the position of the probe electrode 102 was determined and fixed firmly. Between the Au electrode (the ground side) 103 and the probe electrode 102, a voltage of -3.0 V was applied, and the distance (Z) between the probe electrode 102 and the recording layer 101 surface was controlled while monitoring the current. Thereafter, the distance from the probe electrode 102 to the surface of the recording layer 101 was changed by controlling the fine control mechanism 107, whereby the current characteristics as shown in Fig. 2 were obtained. It is required that the probe voltage should be controlled so that the probe current Ip for controlling the distance from the probe electrode 102 to the surface of the recording layer 101 may be $10^{-7}A \geq Ip \geq 10^{-12}A$, preferably $10^{-8}A \geq Ip \geq 10^{-10}A$.

First, the controlled current was set to be current value of the a region in Fig. 2 ($10^{-7}$A) - (Condition of probe grounding). When the current value was measured by applying reading voltage of 1.5 V which was a voltage not exceeding the threshold voltage which gives rise to electric memory effect between the probe electrode 102 and the Au electrode 103, OFF state was exhibited at μA or less. Next, after a triangular pulse voltage having the waveform shown in Fig. 3 which is an voltage of or higher than the threshold voltage of Vth ON which gives rise to ON state, the current was again measured by applying a voltage of 1.5 V between the electrodes, whereby a current of about 0.7 mA was found to flow, thus indicating the ON state.

Next, after a triangular pulse voltage with a peak voltage of 5 V and a pulse width of 1 μS which is a voltage of or higher than the threshold voltage Vth OFF at which the change occurs from the ON state to the OFF state, 1.5 V was again applied, whereby it was confirmed that the current value at this time was returned to OFF state at μA or less.

Next, with the probe current Ip being set at $10^{-9}$ A (b region in Fig. 2), the distance Z between the probe electrode 102 and the surface of the recording layer 101 was controlled.

While moving the XY stage 114 at a constant interval (1 μ), a pulse voltage (15 Vmax, 1 μS) of ON or higher than the threshold value Vth ON having the same waveform as in Fig. 3 was applied to write the ON state. Then, by applying a probe voltage of 1.5 V for reading between the probe electrode 102 and the

counter-electrode 103, the change in current quantity passing between the ON state region and OFF state region can be directly read or through the servo circuit 106. In this Example, it was confirmed that the probe current passing through the ON state region was found to be changed by 3 digits or more as compared with before recording (or the OFF state region).

Further, as the result of tracing again the recording position by setting the probe voltage at 10 V of the threshold voltage Vth OFF or higher, it was also confirmed that all the recorded state was erased to be transited to the OFF state.

Next, by use of the fine control mechanism 107, the resolving power was measured by writing stripes of 1 μ length with various pitches between 0.001 μ and 0.1 μ, and it was found to be 0.01 μ or less.

The SOAZ-LB film used in the above experiments was prepared as described below.

After an optically polished glass substrate (substrate 104) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 103).

Next, a chloroform solution containing SOAZ dissolved at a concentration of 0.2 mg/ml was spread over an aqueous phase of 20°C to form a monomolecular film on the water surface. After evaporation of the solvent, the surface pressure of such monomolecular film was enhanced to 20 mN/m, and further while this was maintained to be constant, the above electrode substrate was dipped gently at a speed of 5 mm/min. So as to transverse across the water surface, and further withdrawn to have two layers of Y-form monomolecular film built up. By repeating appropriate times of this operation, 6 kinds of 2, 4, 8, 12, 20 and 30 layers of built-up films were formed on the above substrate and used for recording and reproducing experiments. The evaluation results are shown in Table 1.

Evaluation was performed overall from the recording and erasing characteristics after applying the pulse and the erasing voltage, further the ratio of the current value under the recording state to that of the erased state (ON/OFF) and the resolving ability, and those with particularly good results were rated as A, those with excellent results as B, and those with relatively somewhat lower results as compared with others as C.

## Example 2

The experiments were conducted in the same manner as in Example 1 except for using t-butyl derivative of luthetium diphthalocyanine [$LuH(Pc)_2$] in place of the SOAZ recording medium used in Example 1. The results are summarized in Table 1. It was found that writing and reading of record could be done at sufficient S/N ratio as in the case of SOAZ.

The built-up conditions of t-butyl derivative of $LuH(Pc)_2$ are shown below.

| | |
|---|---|
| Solvent: | chloroform/trimethylbenzene/acetone (1/1/2) |
| Concentration: | 0.5 mg/ml |
| Aqueous phase: | pure water, water temperature 20°C |
| Surface pressure: | 20 mN/m, vertical moving speed of substrate 3mm/min. |

## Examples 3 - 9

Recording media were prepared by use of the substrate electrode materials and the dye compounds shown in Table 2, and the same experiments as in Examples 1 and 2 were conducted with the controlled current value of the probe current set at $10^{-9}$ A to obtain the results shown in Table 2. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 1

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| SOAZ | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| $LuH(Pc)_2$ | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 2

| Example | Substrate Electrode | Dye Compound | Recording Reproducibility | Resolving Power |
|---|---|---|---|---|
| 3 | Pt (100Å) | SOAZ | ○ | Not more than 0.01 μ |
| 5 | Cr/Au (50Å/400Å) | Tetraphenylporphyrine derivative * | ○ | Not more than 0.05 μ |
| 4 | ITO (1000Å) | SOAZ | ○ | Not more than 0.03 μ |
| 6 | Cr/Au (50Å/400Å) | Anthracene derivative ** | ○ | Not more than 0.1 μ |
| 7 | Cr/Au (50Å/400Å) | Docosylpyradinium-tetracyanoquinodimethane | ○ | Not more than 0.01 μ |
| 8 | Cr/Au (50Å/400Å) | Pentacosa-10,12-diynoic acid | ○ | Not more than 0.01 μ |
| 9 | Cr/Ar (50Å/400Å) | Bacteriorhodopsin *** | ○ | Not more than 0.05 μ |

*

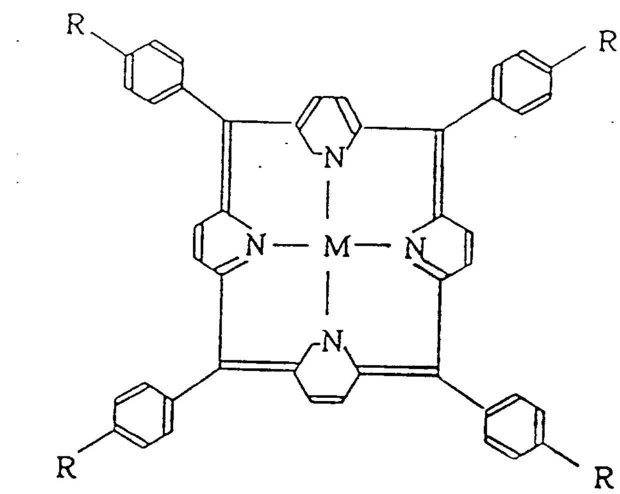

$R=OCH\ (COOH)\ C_{20}H_{41}$

**

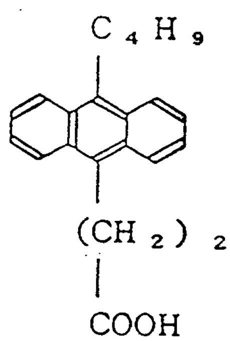

*** violet film extracted from a cultured product obtained by culturing a highly halophilic bacterium according to the known method.

In the Examples as described above, the LB method was employed for formation of the dye recording layer, but any film forming method can be used without limitation to the LB method, provided that an extremely thin film can be prepared, and specifically the vacuum vapor deposition method such as MBE, CVD method, etc. may be included.

Applicable materials are not limited to only organic compounds, but inorganic materials such as chalcogenide compounds, etc. are also applicable.

Further, it is also possible to combine the electrode and the recording layer by use of a semiconductor as the electrode on the recording medium side.

The present invention is not limited to the use of any particular substrate material, shape or surface structure.

Example 10

A recording/reproducing device shown in and described with reference to Fig. 1 was employed. As the probe electrode 102, a probe electrode made of platinum was used and recording, reproduction and erasure experiments were carried out using as the recording layer 101 a chalcogenide glass represented by the composition formula $Si_{16}Ge_{14}As_{5}Te_{65}$ (the subscripts correspond to atomic%) (film thickness 2000 Å) formed on the electrode 103 formed of Au.

A recording medium 1 having a recording layer 101 of the above chalcogenide glass having a thickness of 2000 Å was placed on the XY stage 114. Between the Au electrode (the ground side) 103 and the probe electrode 102, a voltage of 1.0 V was applied, and the distance (Z) between the probe electrode 102 and the recording layer 101 surface was controlled while monitoring the current. Thereafter, the fine control mechanism 107 was controlled so that the probe current Ip became $10^{-9}$ A.

It is required that the probe voltage should be controlled so that the probe current Ip for controlling the distance from the probe electrode 102 to the surface of the recording layer 101 may be $10^{-7}$ A≧ Ip ≧ $10^{-12}$A, preferably $10^{-8}$ A≧ Ip ≧ $10^{-10}$ A.

While moving the XY stage 114 at a constant interval (1 μ), a rectangular pulse voltage (20 Vmax, 0.1 μS) of or higher than the threshold value Vth ON was applied to give rise to a low resistance state (ON state). Then, by applying a probe voltage of 1.0 V for reading between the probe electrode 102 and the counter-electrode 103, the change in current quantity passing between the ON state region and OFF state region can be directly read or through the servo circuit 106. In this Example, it was confirmed that the probe current passing through the ON state region was found to be changed by 2 digits or more as compared with before recording (or the OFF state region).

Further, as the result of tracing again the recording position while applying a rectangular pulse voltage (50 Vmax, 10 μS) of or higher than the threshold voltage Vth OFF on the probe electrode, it was also confirmed that all the recorded state was erased and returned to the OFF state. Erasing of recording is also possible by the optical method.

Next, by use of the fine control mechanism 107, the resolving power was measured by writing stripes of 1 μ length with various pitches between 0.01 μ and 1 μ, and it was found to be 0.1 μ or less.

The chalcogenide glass used in the above experiments was prepared as described below.

After an optically polished glass substrate (substrate 104) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 103).

Next, an amorphous semiconductor represented by the atomic composition ratio of $Si_{16}Ge_{14}As_5Te_{65}$ was vapor deposited to a film thickness of 2000 Å by the vacuum vapor deposition method known in the art and used as the recording medium.

Example 11

The same experiment as in Example 10 was conducted except for using $Ge_{15}Te_{81}Sb_2S_2$ in place of $Si_{16}Ge_{14}As_5Te_{65}$ used in Example 10. It was found that writing and reading of record could be done at sufficient S/N ratio similarly as in Example 1.

Example 12

The same recording and reproducing experiment as in Example 1, except for using $CuTCNQF_4$ in place of the chalcogenide glass recording medium used in Examples 10 and 11. A rectangular pulse of 2 Vmax, 10 ns was used as the application voltage for recording, and the application voltage for control of the probe current was made 0.1 V. As the result, recording and reproduction could be done at sufficient S/N ratio similarly as in Example 1. The method for preparation of the $CuTCNQF_4$ recording medium is described below.

After an optically polished glass substrate was washed, Cu was deposited to 2000 Å according to the vacuum vapor deposition method to provide an electrode. Further, Cu and $TCNQF_4$ were co-deposited by the vacuum vapor deposition method to deposite a Cu-$TCNQF_4$ layer to 2000 Å (substrate temperature; room temperature). At this time, heating was effected by passing current value previously set so that the vapor deposition speed may become about Cu, 5Å/s; $TCNQF_4$, 20 Å/s. As the result, it was confirmed that a blue film by formation of $CuTCNQF_4$ was deposited.

Example 13

After an electrode was formed by vacuum vapor deposition of Cr to a film thickness of 500 Å on an optically polished glass substrate, an amorphous silicon film of $p^+$ type with a thickness of 1000 Å was formed. The preparation conditions at that time were as follows:

| | |
|---|---|
| Introduced gases: | $B_2H_6/SiH_4$ ($N_{BH}/N_{SiH} = 10^{-1}$) (diluted with $H_2$ gas to 0.025 mol%) |
| rf power: | 0.01 W/cm$^2$ |

Pressure: 0.5 torr
Substrate temperature: 300 °C
Deposition speed: 30 Å/min.

Next, after the superfluous starting gases were discharged, new starting gases were fed to deposite a n-type amorphous silicon to 5000 Å. The preparation conditions were as follows.

Introduced gases: $PH_3/SiH_4$ ($N_{PH}/N_{SiH} = 5 \times 10^{-3}$) (diluted with $H_2$ gas to 0.05 mol%)
rf power: 0.01 W/cm$^2$
Pressure: 0.5 torr
Substrate temperature: 300 °C
Deposition speed: 40 Å/min.

Also, after the starting gases were discharged, $SiH_4$ diluted with $H_2$ gas to 0.05 mol% was introduced into the chamber, and an i-phase amorphous silicon was deposited to 1000 Å under otherwise the same conditions.

By use of the recording medium as prepared above, the same recording and reproduction were effected in the same manner as in Example 10. As the result, recording and reproduction could be done with sufficient S/N ratio exhibited. For recording, reproduction and erasing, the following voltages were applied.

For recording: 20 V
For reproduction: 0.5 V
For erasing: - 5V

Having described about the methods for various recording media in the above Examples, any film forming method capable of preparing an extremely uniform film can be used and the method of the present invention is not limitative. The present invention is not also limitative of the substrate material, its shape and surface structure at all.

Example 14

A recording/reproducing device shown in Fig. 10 was employed. As the probe electrodes 1002a, b, c, three tungsten probe electrodes 3 were employed. The probe electrodes 1002a, b, c were used for controlling the distance (Z) from the surface of the recording layer 101, and its distance (Z) is finely controlled by a piezoelectric element so that the current may be controlled to be constant. Further, the fine control mechanism 1007 is designed so that fine control may be possible also in the plane (X,Y) direction. However, all of these are known techniques. Also, the probe electrodes 1002a, b, c can be used for direct recording, reproduction and erasing. The recording medium is placed on the XY stage 1014 with high precision and can be moved to any desired position.

Next, the experiments of recording, reproduction and erasing by use of an LB film (8 layers) of squarilium-bis-6-octylazulene (hereinafter abbreviated as SOAZ) formed on the electrode 1003 formed of Au are described in detail.

A recording medium 1 having a recording layer 101 with 8 built-up SOAZ layers was placed on the XY stage 1014, and first the positions of the probe electrodes 1002a, b, c were determined and fixed firmly. Between the Au electrode (the ground side) 1003 and the probe electrode 1002, a voltage of -3.0 V was applied, and the distance (Z) between the probe electrode 1002 and the recording layer 101 surface was controlled while monitoring the current. Thereafter, the distance from the probe electrode 1002 to the surface of the recording layer 101 was changed by controlling the fine control mechanism 1007, whereby the current characteristics as shown in Fig. 2 were obtained. It is required that the probe voltage should be controlled so that the probe current Ip for controlling the distance from the probe electrode 1002 to the surface of the recording layer 101 may be $10^{-7}$A ≧ Ip ≧ $10^{-12}$A, preferably $10^{-8}$A ≧ Ip ≧ $10^{-10}$A.

First, the controlled current was set to the current value of the a region in Fig. 2 ($10^{-7}$A) - (Condition of probe grounding). When the current value was measured by applying reading voltage of 1.5 V which was a voltage not exceeding the threshold voltage which gives rise to electric memory effect between the probe electrode 1002 and the Au electrode 1003, OFF state was exhibited at µA or less. Next, after a triangular pulse voltage having the waveform shown in Fig. 3 which is an voltage of or higher than the threshold voltage Vth ON which gives rise to ON state, the current was again measured by applying a voltage of 1.5 V between the electrodes, whereby a current of about 0.7 mA was found to flow, thus indicating the ON state.

Next, after a triangular pulse voltage with a peak voltage of 5 V and a pulse width of 1 µS which is a voltage of or higher than the threshold voltage Vth OFF at which the change occurs from the ON state to the OFF state, 1.5 V was again applied, whereby it was confirmed that the current value at this time was

returned to OFF state at μA or less.

Next, with the probe current Ip being set at $10^{-9}$ A (b region in Fig. 2), the distance Z between the probe electrode 1002a, b, c and the surface of the recording layer 101 was controlled.

While moving the XY stage slowly along the Y-axis under application of a triangular pulse voltage having the waveform as shown in Fig. 3 which is a voltage of the threshold voltage Vth ON or higher at which the ON state occurs at the three probes, the track signal Y track was recorded (Fig. 11A)

The probes 1002 a, b and c were returned to the original positions, then while applying a triangular pulse voltage having the waveform as shown in Fig. 3 which is a voltage of the threshold voltage Vth ON or higher at which the ON state occurs at the two probes (1002-a, c) along the X-axis, track signals along the X-axis were recorded (Fig. 11B).

The remaining one probe (1002-b) wrote the ON state by applying a pulse voltage (15 Vmax, 1 μS) of the threshold voltage Vth, ON or higher having the same waveform as in Fig. 3 at the predetermined position of the timing signal, and also the data were recorded at the remaining sites by use of the same method.

Next, the probe 1002-a was moved along the Y-axis to the track recorded with the probe 1002-c, and the same operation as described above was conducted. At this time, only the probe 1001a performs reading of the track signal. Subsequently, this operation was repeated until a recording medium having the track signals and the data recorded thereon was prepared (Fig. 11C).

Reading can be done by applying a probe voltage of 1.5 V for reading between the probe electrode 1002-b and the counter-electrode 1003, and reading directly the change in current quantity passing between the ON state region and OFF state region or through the servo circuit 1006. In this Example, it was confirmed that the probe current passing through the ON state region was found to be changed by 3 digits or more as compared with that before recording (or the OFF state region).

Further, as the result of tracing again the recording position by setting the probe voltage at 10 V of the threshold voltage Vth OFF or higher, it was also confirmed that all the recorded state was erased to be transited to the OFF state.

Next, by use of the fine control mechanism 1007, the resolving power was measured by writing stripes of 1 μ length with various pitches between 0.001 μ and 0.1 μ, and it was found to be 0.01 μ or less.

The SOAZ-LB film used in the above experiments was prepared as described in Example 1. The evaluation results are shown in Table 3 and the basis of evaluation (A, B, or C) is as described in Example 1.

Example 15

The experiments were conducted in the same manner as in Example 14 except for using t-butyl derivative of luthetium diphthalocyanine [$LuH(Pc)_2$] in place of the SOAZ recording medium used in Example 14. The results are summarized in Table 3. It was found that writing and reading of record could be done at sufficient S/N ratio as in the case of SOAZ.

The built-up conditions of t-butyl derivative of $LuH(Pc)_2$ are shown below.

| | |
|---|---|
| Solvent: | chloroform/trimethylbenzene/acetone (1/1/2) |
| Concentration: | 0.5 mg/ml |
| Aqueous phase: | pure water, water temperature 20 °C |
| Surface pressure: | 20 mN/m, vertical moving speed of substrate 3 mm/min. |

Examples 16 - 22

Recording media were prepared by use of the substrate electrode materials and the dye compounds shown in Table 4, and the same experiments as in Examples 14 and 15 were conducted with the controlled current value of the probe current set at $10^{-9}$ A to obtain the results shown in Table 4. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 3

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| SOAZ | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| LuH (Pc), | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 4

| Example | Substrate Electrode | Dye Compound | Recording Reproducibility | Resolving Power |
|---|---|---|---|---|
| 16 | Pt (100Å) | SOAZ | ○ | Not more than 0.01 μ |
| 17 | Cr/Au (50Å/400Å) | Tetraphenylporphyrine derivative * | ○ | Not more than 0.05 μ |
| 18 | ITO (1000Å) | SOAZ | ○ | Not more than 0.03 μ |
| 19 | Cr/Au (50Å/400Å) | Anthracene derivative ** | ○ | Not more than 0.1 μ |
| 20 | Cr/Au (50Å/400Å) | Docosylpyradinium-tetracyanoquinodimethane | ○ | Not more than 0.01 μ |
| 21 | Cr/Au (50Å/400Å) | Pentacosa-10,12-diynoic acid | ○ | Not more than 0.01 μ |
| 22 | Cr/Ar (50Å/400Å) | Bacteriorhodopsin *** | ○ | Not more than 0.05 μ |

*

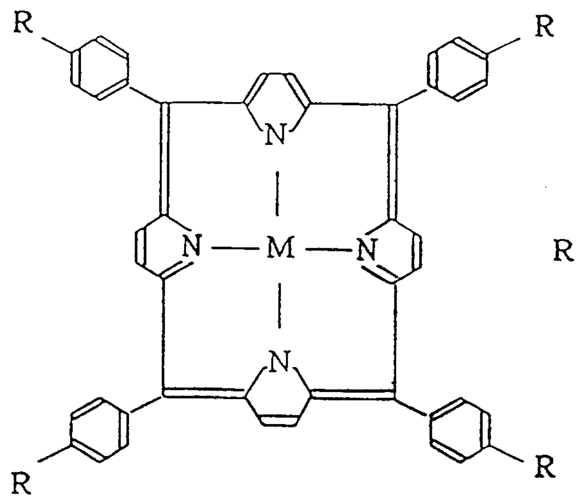

R=OCH (COOH) $C_{20}H_{41}$

**

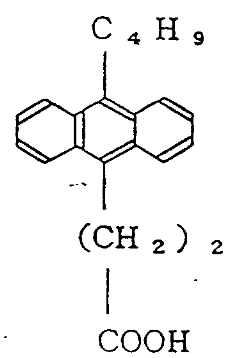

*** violet film extracted from a cultured product obtained by culturing a highly halophilic bacterium according to the known method.

Example 23

When the same experiments were conducted by use of the devices shown in Fig. 10D-F, in place of the devices shown in Fig. 10A-C, the same results were obtained.

In the Examples as described above, the LB method was employed for formation of the dye recording layer, but any film forming method can be used without limitation to the LB method, provided that an extremely thin film can be prepared, and specifically the vacuum vapor deposition method such as an MBE method, a CVD method, etc. may be included.

Applicable materials are not limited to only other organic compounds, but inorganic materials such as chalcogenide compounds, etc. are also applicable.

Further, it is also possible to use an integration of the electrode and the recording layer by use of a semiconductor as the electrode on the recording medium side.

The present invention is not limitative of the substrate material, its shape and surface structure at all. Also, although three probes are used in this Example, the number of probes can also be greater than three.

Example 24

With use of Au as the electrode 103 shown in Fig. 1, an LB film having two layers of pentacosa-10, 12-diynoic acid (DA12-8) built up as the recording layer on the Au electrode was used.

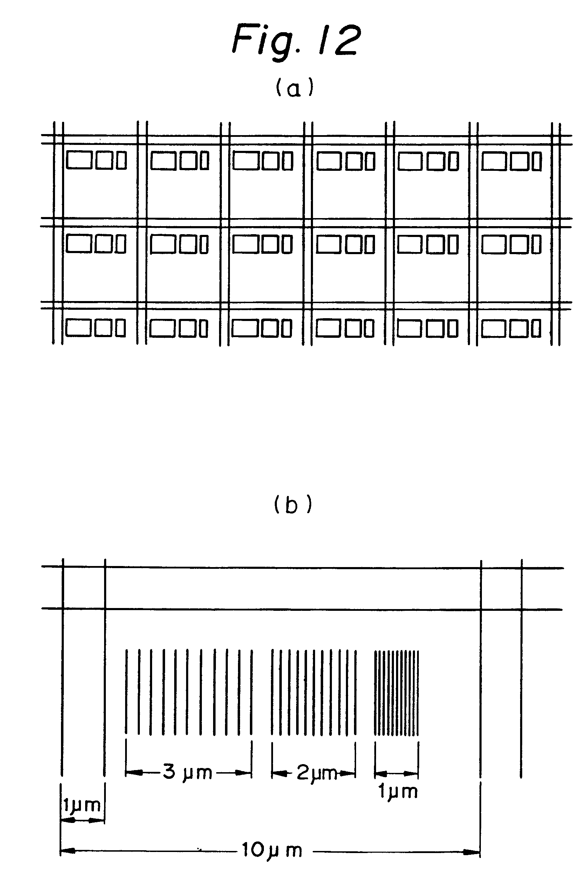

Such polymerizable recording medium was mounted on ELS-3300 electron beam picture drawing device produced by Elionics Co., and a picture was drawn by use of a lattice pattern generating device shown in Fig. 12A under the conditions of an acceleration voltage of 20 kV, a current value of 1 x $10^{-9}$A, a stationary spot diameter of 0.4 µm, an exposure time of 0.5 µsec/spot.

The magnification at this time was 50-fold.

Next, under the conditions of an acceleration voltage of 20 kV, a current value of 1 x $10^{-11}$A, a stationary spot diameter of 0.04 µm, an exposure time of 0.5 µsec/spot, a line pattern in Fig. 12 was similarly drawn within each lattice.

The pattern thus drawn was read by use of a reproducing device shown in Fig. 1. Next, its process is shown.

With the recording medium firmly fixed on the stage, first the position of the probe electrode was determined by visual observation. At a probe voltage set at 2 V, the distance between the probe electrode and the recording medium was controlled so that the probe current became $10^{-9}$ A by controlling the coarse mechanism in the Z direction. After the lattice pattern was first searched by coarse scanning in the direction within the plane (x, y), the line pattern was read by fine scanning within the plane (x, y). It was found that the portion irradiated by the electron beam was polymerized and its film thickness was recognized to be changed (reduced) by about several Å as calculated on the changed amount of servo voltage. Also, the line width read was 0.022 µm and thus it was found that at least a recording resolving power of about 0.02 µm could be obtained.

The DA12-8 recording medium used in the above experiment was prepared as described below.

After an optically polished glass substrate was washed clean with a netural detergent and Trichlene, Cr was deposited to a thickness of 50 Å as the subbing layer by the vacuum vapor deposition method, and further Au was vapor deposited to 400 Å to form a subbing electrode. DA12-8 was dissolved in chloroform at a concentration of 1 x $10^{-3}$M and 200 µl of the resultant solution was spread on an aqueous phase ($MnCl_2$: 5 x $10^{-4}$ M, $KHCO_3$: 5 x $10^{-5}$ M, pH 6.8, water temperature 20 °C).

After evaporation of the solvent, the surface pressure was enhanced to 20 mN/m, and further while maintaining the pressure to be constant, the above electrode substrate was dipped gently so as to transverse across the water surface and further withdrawn to build up two layers of a monomolecular film. The DA12-8 monomolecular built-up film thus formed on the Au electrode was dried on air for 24 hours to provide a recording medium.

Example 25

Entirely the same experiment as in Example 24 was conducted except for using a recording medium having two layers of ω-tricosenic acid on $n^+$-Si substrate. However, the exposure time was set at 5 µsec/spot. The line width read was 0.013 µm, and a recording resolving power of about 0.01 µm may be expected.

The LB film forming conditions of ω-tricosenic acid were as follows.

| | |
|---|---|
| Solvent: | chloroform |
| Concentration: | 1 mg/ml |
| Aqueous phase: | $H_2O$ (pure water), water temperture 20 °C |
| Surface pressure: | 20 mN/m, vertical substrate moving speed 20 mm/min. |

Example 26

Entirely the same experiment as in Example 24. was conducted except for using two-layer built-up film of arachidic acid. However, the exposure time was made 20 µsec/spot. Recording was effected through change in the LB film structure based on generation of heat by electron beam irradiation, and the resolving power was poorer as compared with Examples 36A, 37, with the line width reproduced being 0.062 µm. The LB film forming conditions of arachidic acid were as follows.

| | |
|---|---|
| Solvent: | chloroform |
| Concentration: | 1 mg/ml |
| Aqueous phase: | $CdCl_2$ 5 x $10^{-4}$ M, water temperture 20 °C |
| Surface pressure: | 30 mN/m, vertical substrate moving speed 5 mm/min. |

Example 27

On the same Au electrode as in Example 24, perylenetetracarboxylic acid anhydride:

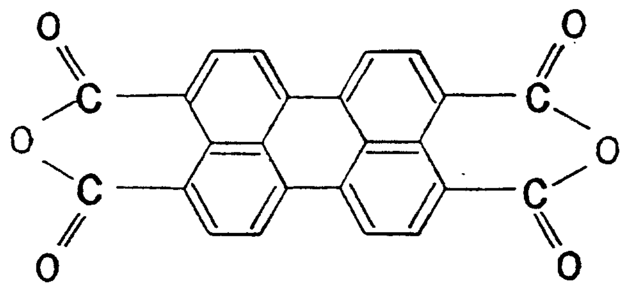

was vacuum vapor deposited (vapor deposition speed 5 Å/sec, film thickness 300 Å) to provide a recording medium, and otherwise the same recording and reproducing experiment as in Example 36A was conducted.

As the result of the experiment conducted at an exposure time of 200 μsec/spot, the electron beam irradiated portion was recognized to be blackened. The line width reproduced with a probe voltage of 2V was found to be 0.04 μm.

Example 28

The pattern shown in Fig. 12 was drawn on a p-form ⟨111⟩ wafer substrate (10 ohm-cm) in the same manner as in Example 24 by injecting $p^+$ ions by means of a converging ion beam device JIBL produced by Nippon Denshi K.K. The injection conditions were as follows.

| | |
|---|---|
| Ion source accelerating voltage: | 40 kV |
| Ion beam current: | 1 nA |
| Injected amount: | $1.3 \times 10^{14}$ ions/cm$^2$ |
| Water temperature: | 300 °C |

Next, when the above pattern record was reproduced with a probe voltage of -0.5 V, the line width was found to be 0.083 μm on an average. Thus, it was found that a resolving power of about 0.1 μm or less could be obtained.

As the result of the heat treatment of the above recording medium at 600 °C, although the resolving power was reduced to about 0.1 μm, stable reproduced signals could be obtained.

Example 29

The pattern in Fig. 12 was drawn by injecting $I^-$ ions by means of the same converging ion beam device in the same manner as in Example 28 on a recording medium having 13 layers of tetraquinodimethane docosylpyridium built up on an optically polished glass substrate.

The injection conditions were ion source acceleration voltage 40 kV, ion beam current 1000 pA, injected amount $5 \times 10^{13}$ ions/cm$^2$, and substrate temperature 20 °C.

When pattern reproduction was effected with a probe voltage of 1 V, the line width was found to be 0.1 μm on an average.

In the Examples as described above, electron beam and ion beam were used as the energy beam, but the energy beam is not limited to these, but electromagnetic waves such as visible light, UV-ray and X-ray, etc. can be also used.

Example 30

The SOAZ-LB film used in the above experiments was prepared as described below.

After an optically polished glass substrate (substrate 1004) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 1003).

Next, a chloroform solution containing SOAZ dissolved at a concentration of 0.2 mg/ml was spread over an aqueous phase of 20 °C to form a monomolecular film on the water surface. After evaporation of the solvent, the surface pressure of such monomolecular film was enhanced to 20 mN/m, and further while this was maintained to be constant, the above electrode substrate was dipped gently at a speed of 5 mm/min. so as to transverse across the water surface, and further withdrawn to have two layers of Y-form monomolecular film built up. By repeating appropriate times of this operation, 6 kinds of 2, 4, 8, 12, 20 and 30 layers of built-up films were formed on the above substrate and used for recording and reproducing experiments. The evaluation results are shown in Table 7.

Evaluation was performed overall from the recording and erasing characteristics after applying the pulse and the erasing voltage, further the ratio of the current value under the recording state to that of the erased state (ON/OFF) and the resolving power, and those with particularly excellent results were rated as A, those with good results as B, and those with relatively somewhat lower results as compared with others as C.

Example 31

The experiments were conducted in the same manner as in Example 14 except for using t-butyl derivative of luthetium diphthalocyanine [$LuH(Pc)_2$] in place of the SOAZ recording medium used in Example 14 The results are summarized in Table 7. It was found that writing and reading of record could be done at sufficient S/N ratio as in the case of SOAZ.

The built-up conditions of t-butyl derivative of $LuH(Pc)_2$ are shown below.

| | |
|---|---|
| Solvent: | chloroform/trimethylbenzene/acetone (1/1/2) |
| Concentration: | 0.5 mg/ml |
| Aqueous phase: | pure water, water temperature 20 °C |
| Surface pressure: | 20 mN/m, vertical moving speed of substrate 3 mm/min. |

Examples 32 - 38

Recording media were prepared by use of the substrate electrode materials and the dye compounds shown in Table 8, and the same experiments as in Examples 30 and 31 were conducted with the controlled current value of the probe current set at $10^{-9}$ A to obtain the results shown in Table 8. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 7

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| SOAZ | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| $LuH(Pc)_2$ | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 8

| Example | Substrate Electrode | Dye Compound | Recording Repro-ducibility | Resolving Power |
|---|---|---|---|---|
| 32 | Pt (100Å) | SOAZ | ○ | Not more than 0.01 μ |
| 33 | Cr/Au (50Å/400Å) | Tetraphenylporphyrine derivative * | ○ | Not more than 0.05 μ |
| 34 | ITO (1000Å) | SOAZ | ○ | Not more than 0.03 μ |
| 35 | Cr/Au (50Å/400Å) | Anthracene derivative ** | ○ | Not more than 0.1 μ |
| 36 | Cr/Au (50Å/400Å) | Docosylpyradinium-tetracyanoquinodimethane | ○ | Not more than 0.01 μ |
| 37 | Cr/Au (50Å/400Å) | Pentacosa-10,12-diynoic acid | ○ | Not more than 0.01 μ |
| 38 | Cr/Ar (50Å/400Å) | Bacteriorhodopsin *** | ○ | Not more than 0.05 μ |

*

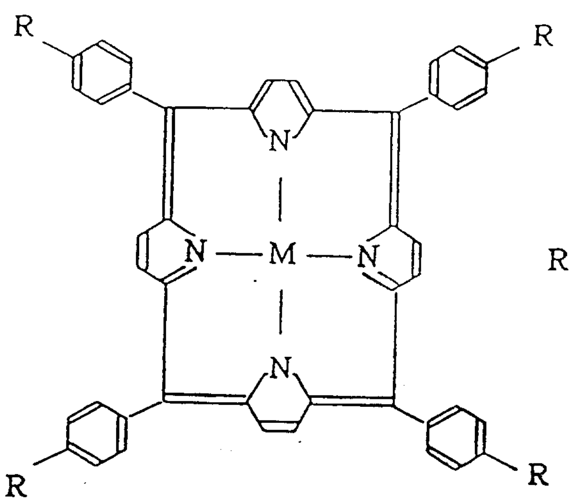

R=OCH (COOH) $C_{20}H_{41}$

**

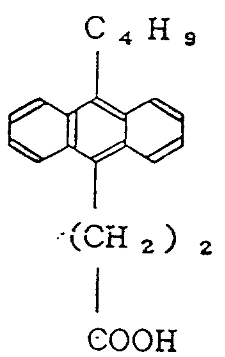

*** violet film extracted from a cultured product obtained by culturing a highly halophilic bacterium according to the known method.

Example 39

When the same experiments were conducted by use of the devices shown in Figs. 10D-F, in place of the devices shown in Figs. 10A-C employed in Examples 30 - 38 the same results were obtained.

In the Examples as described above, the LB method was employed for formation of the dye recording layer, but any film forming method can be used without limitation to the LB method, provided that an extremely thin film can be prepared, and specifically the vacuum vapor deposition method such as an MBE method, a CVD method, etc. may be included.

Applicable materials are not limited to only organic compounds, but inorganic materials such as chalcogenide compounds, etc. are also applicable.

Further, it is also possible to use an integration of the electrode and the recording layer by use of a semiconductor as the electrode on the recording medium side.

The present invention is not limitative of the substrate material, its shape and surface structure at all. More than three probes may be employed although three probes were employed in this example.

Embodiments of the invention enable a novel recording and reproducing device having the following specific features to be provided.

(1) Even when compared with optical recording, by far higher density recording is possible.

(2) Since the recording layer is formed by building up monomolecular films, the film thickness control could be done easily on the molecular order (several Å to several ten Å). Also, since controllability is excellent, reproducibility is high when forming a recording layer.
(3) Since the recording is thin and good, productivity is high and an inexpensive recording medium can be provided.
(4) The energy required for reproduction is small and the power consumption is little.
(5) The recording speed and reading speed are rapid by providing track.
(6) The error ratio is low due to track and timing signals.
(7) A recording resolving power of 0.01 µm or more can be obtained and a high density recording better by 2 digits or more as compared with the optical recording method of the prior art is possible.
(8) Because the energy required for reading of record is small, there is no destruction of record accompanied with reproduction. Therefore, a large capacity file memory with good stability can be realized.
(9) The structure of the recording medium is simple and its preparation process is also simple. Therefore, due to excellent controllability, reproducibility is high when the element is formed and also productivity is rich.
(10) The scope of organic materials and inorganic materials which can be utilized for recording medium is broad, and also a very cheap recording medium can be provided.

## Claims

**1.** A device for recording and/or reproducing information comprising a probe electrode (102), a recording medium (101) opposite to the probe electrode (102) and either one or both of (a) means (108) for applying a writing voltage between the probe electrode (102) and the medium (101) to record information thereon and (b) means (108) for applying a reading voltage between the probe electrode (102) and the medium (101) to detect information recorded thereon, characterised in that the medium (101) can undergo a transition from a first state to a second state which has a distinct and different electrical conductivity from that of the first state and in that the transition can be induced by the writing voltage and/or that the difference in state can be detected by the reading voltage.

**2.** A device according to claim 1, wherein the recording medium (101) has is a film or layer on the surface of a substrate.

**3.** A device according to claim 1 or 2, further comprising means (107, 109, 110, 114) for adjusting the positional relationship between the probe electrode (102) and the recording medium (101).

**4.** A device according to claim 3, wherein the means (107, 114) is arranged to adjust the positional relationship in a direction parallel to the surface of the recording medium.

**5.** A device according to claim 4, wherein the means (107) for controlling the positional relationship is an X,Y scanning means for the probe electrode (102).

**6.** A device according to any of claims 3, 4 or 5, wherein the means (107, 114) is arranged to adjust the positional relationship in a direction normal to the surface of the recording medium.

**7.** A device according to claim 6, wherein the means (107, 114) is arranged to maintain a constant distance between the probe electrode and the surface of the recording medium during recording or reproducing of information such that the current therebetween remains constant.

**8.** A device according to any of claims 3 to 7, wherein the means (107) is arranged to bring about fine adjustment in three dimensions between the relative position of the probe electrode and the recording medium.

**9.** A device according to any preceding claim, wherein there is present means (108) for applying a reading voltage between the probe electrode (102) and the medium (101) and said means further comprises means (106) for reading a current passing through the recording medium when the reading voltage is applied.

**10.** A device according to claim 9, in which the means for applying a reading voltage has a servo circuit (106) for reproducing information.

**11.** A device according to claim 9, wherein the means for applying a reading voltage has an A/D transducer for reproducing information.

**12.** A device according to any preceding claim, wherein the reading voltage is applied as a bias voltage.

**13.** A device according to any preceding claim, wherein the reading voltage does not cause a transition from one state to another of the medium.

**14.** A device according to any preceding claim, wherein means (108) is present for applying a writing voltage between the probe electrode (102) and the recording medium (101), and said means is arranged to apply the writing voltage as a pulse voltage.

**15.** A device according to any preceding claim, further comprising means for erasing the recorded information.

**16.** A device according to any of claims 1 to 14, wherein the recording medium is capable of a reverse transition from the second state to the first state.

**17.** A device according to claim 16 further comprising means (108) for erasing the recorded information by bringing about the reverse state transition.

**18.** A device according to claim 17, wherein the erasing means (108) is arranged to apply a voltage between the probe electrode and the recording medium to bring about the reverse state transition.

**19.** A device according to any preceding claim, wherein the recording medium comprises a film capable of acting per se as an electrode.

**20.** A device according to any preceding claim, wherein there are provided a plurality of the probe electrodes.

**21.** A device according to any preceding claim, wherein the recording medium comprises a monomolecular film of an organic compound or a film built up from a plurality of monomolecular layers of an organic compound.

**22.** A device according to claim 21, wherein the organic compound has in its molecules a group having pi-electron levels.

**23.** A device according to claim 21, wherein the organic compound is a dye.

**24.** A device according to claim 21, wherein the organic compound is selected from dyes having a porphryn skeleton, azulene dyes, cyanine dyes, dyes having a squariliun group, condensed heterocyclic compounds, diacetylene polymers, tetraquinodimethane, tetrathiafluvalene and metal complex compounds.

**25.** A device according to any of claims 1 to 20, wherein the recording medium comprises a semiconductor.

**26.** A device according to claim 25, wherein the semiconductor is an amorphous semiconductor formed of an oxide glass or borate glass.

**27.** A device according to claim 26, wherein the semiconductor is a chalcogenide glass Containing at least one element of Groups III, IV, V and VI of the periodic table and at least one of Se and Te, or is a glass of the Ge-Sb-Se type.

**28.** A device according to claim 25, wherein the semiconductor is a silicon film.

**29.** A device according to claim 28, wherein the silicon film is an amorphous silicon film.

**30.** A device according to claim 29, wherein the amorphous silicon film is a p+/n/i laminate or n+/p/i laminate.

**31.** A device according to claim 25, wherein the semiconductor is an organic semiconductor.

**32.** A device according to claim 31, wherein the organic semiconductor is a compound containing an electron acceptor and a metal.

**33.** A device according to claim 32, wherein the electron acceptor is selected from:
tetracyanoquinodimethane, tetracyanoethylene, tetrafluorotetracyanoquinodimethane, and tetracyanonaphthoquinodimethane.

**34.** Use of a device as claimed in any of claims 1 to 33 to record information by causing a tunnel current to flow between the probe electrode (102) and the recording medium (101).

**35.** Use of a device as claimed in any of claims 1 to 33 to reproduce information by causing a tunnel current to flow between the probe electrode (102) and the recording medium (101).

**36.** A reproducing device, comprising a probe electrode (102), a recording medium (101) written by an energy beam irradiation, the said medium being capable of undergoing a transition between at least two states which have distinct and different electrical conductivities, means (108) for applying a voltage onto said recording medium (101) from said probe electrode (102) and means (106) for reading the current flowing through said recording medium (101).

**37.** A device according to claim 36, wherein the recording medium is formed of a semiconductive substance having a conductivity of $10^{-10}$ $(ohm.cm)^{-1}$ or higher.

**38.** A device according to claim 36, wherein the recording medium is formed of a semiconductive substance having a conductivity of $10^{-8}$ $(ohm.cm)^{-1}$ or higher.

**39.** A device according to claim 36 or 37, wherein the semiconductive substance contains at least one element selected from Group IVB, Group IIIB, Group VB, Group IIB and Group VIB of the long period type periodic table.

**40.** A device according to claim 39, wherein the semiconductive substance contains at least one element or compound selected from the group Si (single crystalline, polysilicon or amorphous), Ge, Ga, GaP, InAs, Inp, SdS, SdSe, ZnO and ZnS.

**41.** A device according to claim 36, wherein the recording medium comprises a monomolecular film of an organic compound or a film built up from monomolecular layers.

**42.** A device according to claim 41, wherein the organic compound has a group having a pi-electron level in the molecule.

**43.** A device according to claim 41, wherein the organic compound is an aromatic polycyclic compound, a polymeric compound having conjugated pi-bonds, a photochromic compound, a polypeptide compound, a compound in a dye association state or electron transfer complex.

**44.** A device according to any of claims 21 to 24 and 41 to 43, wherein the monomolecular film or built-up film has a thickness in the range of several Å to several thousand Å.

**45.** A device according to any of clams 21 to 24 and 41 to 44, wherein said monomolecular film of built-up film has a thickness in the range of several Å to 500 Å.

**46.** A device according to any of claims 21 to 24 and 41 to 45, wherein the monomolecular film or built-up film has a thickness in the range of 10 Å to 200 Å.

47. A device according to any of claims 21 to 24 and 41 to 46, wherein said monomolecular film or a built-up film has been formed by the Langmuir-Blodgett method.

48. A device according to any of claims 36 to 47, wherein the information has been recorded by an electron beam, an ion beam, a laser beam, an X-ray, an UV-ray or visible light.

49. A device according to any of claims 36 to 48, wherein the recording medium (101) is disposed between the probe electrode (102) and a counter electrode disposed in opposition to the probe electrode.

50. A device comprising a probe electrode and a recording medium opposite to the probe electrode so that a writing or reading voltage can be applied therebetween, characterised in that the medium exhibits a transition from a first state to a second state of different electrical conductivity from the first state.

51. A device according to claim 50, having the features of any of claims 2, 3 and 20 to 33.

52. A device according to claim 50 or 51, wherein the recording medium is capable of a reverse transition from the second state to the first state.

53. A medium for storage of information to be recorded and/or reproduced by a probe electrode, characterised in that the medium exhibits a transition from a first state to a second state of different electrical conductivity which transition can be induced by a writing voltage or detected by a reading voltage.

54. A medium according to claim 53 having the features of any of claims 2, 3 and 20 to 33.

55. A medium according to claim 53 or 54, which is capable of a reverse transition from the second state to the first state.

56. A medium according to claim 53, 54 or 55 recorded with information which is readable by a probe electrode of a scanning tunnelling device.

57. A medium according to claim 56, recorded with information by a probe electrode of a scanning tunnelling device.

58. A medium according to claim 56, recorded with information by irradiating the medium with a high energy particle beam or with light.

**Patentansprüche**

1. Vorrichtung zum Aufzeichnen und/oder Wiedergeben von Information, mit einer Sondenelektrode (102), einem Aufzeichnungsmedium (101), das der Sondenelektrode (102) gegenüber angeordnet ist, sowie (a) einer Einrichtung (108) zum Anlegen einer Schreibspannung zwischen Sondenelektrode (102) und Medium (101) zur Aufzeichnung von Information darauf und/oder (b) einer Einrichtung (108) zum Anlegen einer Lesespannung zwischen Sondenelektrode (102) und Medium (101) zur Ermittlung von darauf aufgezeichneter Information, dadurch gekennzeichnet, daß das Medium (101) einen Übergang von einem ersten Zustand zu einem zweiten Zustand eingehen kann, der eine ausgeprägte und verschiedene spezifische elektrische Leitfähigkeit von der des ersten Zustands aufweist, und daß der Übergang durch die Schreibspannung induziert werden kann und/oder daß die Verschiedenheit im Zustand durch die Lesespannung ermittelt werden kann.

2. Vorrichtung nach Anspruch 1, worin das Aufzeichnungsmedium (101) ein Film oder eine Schicht auf der Oberfläche eines Substrats ist.

3. Vorrichtung nach Anspruch 1 oder 2, welche außerdem Einrichtungen (107, 109, 110, 114) zur Einstellung der Positionsbeziehung zwischen der Sondenelektrode (102) und dem Aufzeichnungsmedium (101) umfaßt.

4. Vorrichtung nach Anspruch 3, worin die Einrichtung (107, 114) zur Einstellung der Positionsbeziehung in einer Richtung parallel zur Oberfläche des Aufzeichnungsmediums angeordnet ist.

5. Vorrichtung nach Anspruch 4, worin die Einrichtung (107) zur Steuerung der Positionsbeziehung eine X,Y-Abtasteinrichtung für die Sondenelektrode (102) ist.

6. Vorrichtung nach einem der Ansprüche 3, 4 oder 5, worin die Einrichtung (107, 114) für eine Einstellung der Positionsbeziehung in der Fläche des Aufzeichnungsmediums senkrechten Richtung ausgelegt ist.

7. Vorrichtung nach Anspruch 6, worin die Einrichtung (107, 114) zur Aufrechterhaltung eines konstanten Abstandes zwischen Sondenelektrode und Fläche des Aufzeichnungsmediums während des Aufzeichnes oder Wiedergebens von Information ausgelegt ist, so daß der Strom dazwischen konstant bleibt.

8. Vorrichtung nach einem der Ansprüche 3 bis 7, worin die Einrichtung (107) zum Erreichen einer Feineinstellung in drei Dimensionen zwischen der relativen Position der Sondenelektrode und dem Aufzeichnungsmedium ausgelegt ist.

9. Vorrichtung nach einem der vorangehenden Ansprüche, worin eine Einrichtung (108) zum Anlegen einer Lesespannung zwischen Sondenelektrode (102) und Medium (101) vorhanden ist und die Einrichtung außerdem eine Einrichtung (106) zum Lesen eines Stroms umfaßt, der durch das Aufzeichungsmedium fließt, wenn die Lesespannung angelegt wird.

10. Vorrichtung nach Anspruch 9, worin die Einrichtung zum Anlegen einer Lesespannung eine Servoschaltung (106) zur Wiedergabe von Information aufweist.

11. Vorrichtung nach Anspruch 9, worin die Einrichtung zum Anlegen einer Lesespannung einen Analog-Digital-Wandler (A/D-Wandler) zur Wiedergabe von Information aufweist.

12. Vorrichtung nach einem der vorangehenden Ansprüche, worin die Lesespannung als Vorspannung angelegt wird.

13. Vorrichtung nach einem der vorangehenden Ansprüche, worin die Lesespannung keinen Übergang des Mediums von einem Zustand in einen anderen hervorruft.

14. Vorrichtung nach einem der vorangehenden Ansprüche, worin die Einrichtung (108) zugegen ist, um eine Schreibspannung zwischen Sondenelektrode (102) und Aufzeichnungsmedium (101) anzulegen, und für ein Anlegen der Schreibspannung als Impulsspannung ausgelegt ist.

15. Vorrichtung nach einem der vorangehenden Ansprüche, welche außerdem eine Einrichtung zum Löschen der aufgezeichneten Information umfaßt.

16. Vorrichtung nach einem der Ansprüche 1 bis 14, worin das Aufzeichnungsmedium einen Rückwärts-Übergang vom zweiten Zustand in den ersten Zustand durchzuführen vermag.

17. Vorrichtung nach Anspruch 16, welche außerdem eine Einrichtung (108) zum Löschen der aufgezeichneten Information dadurch, daß man den Rückwärts-Zustandsübergang durchführt, umfaßt.

18. Vorrichtung nach Anspruch 17, worin die Einrichtung (108) zum Löschen für ein Anlegen einer Spannung zwischen Sondenelektrode und Aufzeichnungsmedium zum Erzeugen eines Rückwärts-Zustandsübergangs ausgelegt ist.

19. Vorrichtung nach einem der vorangehenden Ansprüche, worin das Aufzeichnungsmedium einen Film umfaßt, der als solcher als Elektrode zu wirken vermag.

20. Vorrichtung nach einem der vorangehenden Ansprüche, worin eine Vielzahl von Sondenelektroden vorgesehen wird.

**21.** Vorrichtung nach einem der vorangehenden Ansprüche, worin das Aufzeichnungsmedium einen monomolekularen Film einer organischen Verbindung oder einen Film umfaßt, der aus einer Vielzahl von monomolekularen Schichten einer organischen Verbindung aufgebaut ist.

**22.** Vorrichtung nach Anspruch 21, worin die organische Verbindung in ihren Molekülen eine Gruppe mit $\pi$-Elektronenniveaus aufweist.

**23.** Vorrichtung nach Anspruch 21, worin die organische Verbindung ein Farbstoff ist.

**24.** Vorrichtung nach Anspruch 21, worin die organische Verbindung gewählt ist aus Farbstoffen mit einem Porphyrin-Gerüst, Azulen-Farbstoffen, Cyanin-Farbstoffen, Farbstoffen mit einer Squarilium-Gruppe, kondensierten heterocyclischen Verbindungen, Diacetylen-Polymeren, Tetrachinodimethan, Tetrathiafulvalen und Metallkomplex-Verbindungen.

**25.** Vorrichtung nach einem der Ansprüche 1 bis 20, worin das Aufzeichnungsmedium einen Halbleiter umfaßt.

**26.** Vorrichtung nach Anspruch 25, worin der Halbleiter ein amorpher Halbleiter ist, der aus einem Oxid-Glas oder Borat-Glas gebildet ist.

**27.** Vorrichtung nach Anspruch 26, worin der Halbleiter ein Chalcogenid-Glas ist, das wenigstens ein Element der Gruppen III, IV, V und VI des Periodensystems der Elemente und wenigstens eines der Elemente Se und Te enthält oder ein Glas des Ge-Sb-Se-Typs ist.

**28.** Vorrichtung nach Anspruch 25, worin der Halbleiter ein Silicium-Film ist.

**29.** Vorrichtung nach Anspruch 28, worin der Silicium-Film ein amorpher Silicium-Film ist.

**30.** Vorrichtung nach Anspruch 29, worin der amorphe Silicium-Film ein p+/n/i-Laminat oder ein n+/p/i-Laminat ist.

**31.** Vorrichtung nach Anspruch 25, worin der Halbleiter ein organischer Halbleiter ist.

**32.** Vorrichtung nach Anspruch 31, worin der organische Halbleiter eine Verbindung ist, die einen Elektronenakzeptor und ein Metall enthält.

**33.** Vorrichtung nach Anspruch 32, worin der Elektronenakzeptor gewählt ist aus Tetracyanochinodimethan, Tetracyanoethylen, Tetrafluortetracyanochinodimethan und Tetracyanonaphthochinodimethan.

**34.** Verwendung einer Vorrichtung nach einem der Ansprüche 1 bis 33 zur Aufzeichnung von Information durch Erzeugen eines Tunnel-Stromflusses zwischen Sondenelektrode (102) und Aufzeichnungsmedium (101).

**35.** Verwendung einer Vorrichtung nach einem der Ansprüche 1 bis 33 zur Wiedergabe von Information durch Erzeugen eines Tunnel-Stromflusses zwischen Sondenelektrode (102) und Aufzeichnungsmedium (101).

**36.** Wiedergabevorrichtung mit einer Sondenelektrode (102), einem Aufzeichnungsmedium (101), das durch Bestrahlung mit einem Energiestrahl beschrieben ist, wobei das Medium eine Zustandsänderung zwischen wenigstens zwei Zuständen eingehen kann, die ausgeprägte und verschiedene spezifische elektrische Leitfähigkeiten aufweisen, einer Einrichtung (108) zum Anlegen einer Spannung an das Aufzeichnungsmedium (101) von der Sondenelektrode (102) aus und einer Einrichtung (106) zum Lesen des durch das Aufzeichnungsmedium (101) fließenden Stroms.

**37.** Vorrichtung nach Anspruch 36, worin das Aufzeichnungsmedium aus einer Halbleiter-Substanz mit einer spezifischen Leitfähigkeit von $10^{-10}$ $(\text{Ohm}\cdot\text{cm})^{-1}$ oder höher gebildet ist.

**38.** Vorrichtung nach Anspruch 36, worin das Aufzeichnungsmedium aus einer Halbleiter-Substanz mit einer spezifischen Leitfähigkeit von $10^{-8}$ $(Ohm \cdot cm)^{-1}$ oder höher gebildet ist.

**39.** Vorrichtung nach Anspruch 36 oder 37, worin die Halbleiter-Substanz wenigstens ein Element enthält, das aus Elementen der Gruppe IV B, der Gruppe III B, der Gruppe V B, der Gruppe II B und der Gruppe VI B der langen Periode des Periodensystems der Elemente gewählt ist.

**40.** Vorrichtung nach Anspruch 39, worin die Halbleiter-Substanz wenigstens ein Element oder eine Verbindung enthält, die gewählt ist aus der Gruppe Si (Einkristall-Silicium, Polysilicium oder amorphes Silicium), Ge, Ga, GaP, InAs, InP, CdS, CdSe, ZnO und ZnS.

**41.** Vorrichtung nach Anspruch 36, worin das Aufzeichnungsmedium einen monomolekularen Film einer organischen Verbindung oder einen Film umfaßt, der aus monomolekularen Schichten aufgebaut ist.

**42.** Vorrichtung nach Anspruch 41, worin die organische Verbindung eine Gruppe mit $\pi$-Elektronenniveaus im Molekül hat.

**43.** Vorrichtung nach Anspruch 41, worin die organische Verbindung eine aromatische polycyclische Verbindung, eine Polymerverbindung mit konjugierten $\pi$-Bindungen, eine photochrome Verbindung, eine Polypeptidverbindung, eine Verbindung in einem Farbstoff-Assoziationszustand oder ein Elektronentransfer-Komplex ist.

**44.** Vorrichtung nach einem der Ansprüche 21 bis 24 und 41 bis 43, worin der monomolekulare Film oder der aus monomolekularen Schichten aufgebaute Film eine Dicke im Bereich von einigen Å bis einigen tausend Å aufweist.

**45.** Vorrichtung nach einem der Ansprüche 21 bis 24 und 41 bis 44, worin der monomolekulare Film oder der aus monomolekularen Schichten aufgebaute Film eine Dicke im Bereich von einigen Å bis 500 Å aufweist.

**46.** Vorrichtung nach einem der Ansprüche 21 bis 24 und 41 bis 45, worin der monomolekulare Film oder der aus monomolekularen Schichten aufgebaute Film eine Dicke im Bereich von 10 Å bis 200 Å aufweist.

**47.** Vorrichtung nach einem der Ansprüche 21 bis 24 und 41 bis 46, worin der monomolekulare Film oder der aus monomolekularen Schichten aufgebaute Film mit Hilfe des Langmuir-Blodgett-Verfahrens gebildet wurde.

**48.** Vorrichtung nach einem der Ansprüche 36 bis 47, worin die Information mit einem Elektronenstrahl, einem Ionenstrahl, einem Laserstrahl, einem Röntgenstrahl, einem UV-Strahl oder sichtbarem Licht aufgezeichnet wurde.

**49.** Vorrichtung nach einem der Ansprüche 36 bis 48, worin das Aufzeichnungsmedium (101) zwischen der Sondenelektrode (102) und einer dieser gegenüberliegenden Gegenelektrode angeordnet ist.

**50.** Vorrichtung mit einer Sondenelektrode und einem Aufzeichnungsmedium, das gegenüber der Sondenelektrode angeordnet ist, so daß eine Schreibspannung oder Lesespannung dazwischen angelegt werden kann, dadurch gekennzeichnet, daß das Medium einen Übergang von einem ersten Zustand zu einem zweiten Zustand unterschiedlicher spezifischer elektrischer Leitfähigkeit von der des ersten Zustands besitzt.

**51.** Vorrichtung nach Anspruch 50, welche die Merkmale eines der Ansprüche 2, 3 und 20 bis 33 aufweist.

**52.** Vorrichtung nach Anspruch 50 oder 51, worin das Aufzeichnungsmedium einen Rückwärts-Übergang vom zweiten Zustand in den ersten Zustand durchführen kann.

**53.** Medium zur Speicherung von Information, die mittels einer Sondenelektrode aufgezeichnet und/oder wiedergegeben werden soll, dadurch gekennzeichnet, daß das Medium einen Übergang von einem

ersten Zustand zu einem zweiten Zustand unterschiedlicher spezifischer elektrischer Leitfähigkeit besitzt, wobei der Übergang induziert werden kann durch eine Schreibspannung oder ermittelt werden kann durch eine Lesespannung.

**54.** Medium nach Anspruch 53 mit den Merkmalen eines der Ansprüche 2, 3 und 20 bis 33.

**55.** Medium nach Anspruch 53 oder 54, das einen Rückwärts-Übergang vom zweiten Zustand in den ersten Zustand durchführen kann.

**56.** Medium nach Anspruch 53, 54 oder 55, auf dem Information aufgezeichnet ist, die lesbar ist mit Hilfe einer Sondenelektrode einer Abtast-Tunnellungsvorrichtung.

**57.** Medium nach Anspruch 56, auf dem Information aufgezeichnet ist mittels einer Sondenelektrode einer Abtast-Tunnellungsvorrichtung.

**58.** Medium nach Anspruch 56, auf dem Information durch Bestrahlen des Mediums mit einem Hochenergie-Teilchenstrahl oder mit Licht aufgezeichnet ist.

**Revendications**

**1.** Dispositif d'enregistrement et/ou de reproduction d'informations, comprenant une électrode-sonde (102), un support d'enregistrement (101) opposé à l'électrode-sonde (102) et l'un ou l'ensemble (a) d'un moyen (108) d'application d'une tension d'écriture entre l'électrode-sonde (102) et le support (101) pour l'enregistrement d'une information sur ce support, et (b) d'un moyen (108) d'application d'une tension de lecture entre l'électrode-sonde (102) et le support (101) pour la détection d'informations enregistrées sur ce support, caractérisé en ce que le support (101) peut subir une transition d'un premier état à un second état qui possède une conductivité électrique distincte et différente de celle du premier état, et en ce que la transition peut être induite par la tension d'écriture et/ou la différence d'état peut être détectée par la tension de lecture.

**2.** Dispositif suivant la revendication 1, dans lequel le support d'enregistrement (101) consiste en un film ou une couche sur la surface d'un substrat.

**3.** Dispositif suivant la revendication 1 ou 2, comprenant en outre des moyens (107, 109, 110, 114) d'ajustement de la relation de position entre l'électrode-sonde (102) et le support d'enregistrement (101).

**4.** Dispositif suivant la revendication 3, dans lequel les moyens (107, 114) sont disposés de manière à ajuster la relation de position dans une direction parallèle à la surface du support d'enregistremenet.

**5.** Dispositif suivant la revendication 4, dans lequel le moyen (107) d'ajustement de la relation de position est un moyen de balayage X, Y pour l'électrode-sonde (102).

**6.** Dispositif suivant l'une quelconque des revendications 3, 4 et 5, dans lequel les moyens (107, 114) sont disposés de manière à ajuster la relation de position dans une direction perpendiculaire à la surface du support d'enregistrement.

**7.** Dispositif suivant la revendication 6, dans lequel les moyens (107, 114) sont disposés de manière à maintenir une distance constante entre l'électrode-sonde et la surface du support d'enregistrement au cours de l'enregistrement ou de la reproduction d'informations, de telle sorte que le courant entre cette électrode et cette surface reste constant.

**8.** Dispositif suivant l'une quelconque des revendications 3 à 7, dans lequel le moyen (107) est disposé de manière à provoquer un ajustement précis en trois dimensions entre la position de l'électrode-sonde et le support d'enregistrement.

**9.** Dispositif suivant l'une quelconque des revendications précédentes, dans lequel est présent un moyen (108) d'application d'une tension de lecture entre l'électrode-sonde (102) et le support (101), et ledit

moyen comprend en outre un moyen (106) de lecture d'un courant passant à travers le support d'enregistrement lorsque la tension de lecture est appliquée.

**10.** Dispositif suivant la revendication 9, dans lequel le moyen d'application d'une tension de lecture comprend un circuit d'asservissement (106) pour la reproduction d'informations.

**11.** Dispositif suivant la revendication 9, dans lequel le moyen d'application d'une tension de lecture comprend un transducteur (A/D) pour la reproduction d'informations.

**12.** Dispositif suivant l'une quelconque des revendications précédentes, dans lequel la tension de lecture est appliquée sous forme d'une tension de polarisation.

**13.** Dispositif suivant l'une quelconque des revendications précédentes, dans lequel la tension de lecture ne provoque pas de transition d'un état à un autre du support.

**14.** Dispositif suivant l'une quelconque des revendications précédentes, dans lequel le moyen (108) est présent pour l'application d'une tension d'écriture entre l'électrode-sonde (102) et le support d'enregistrement (101), et ledit moyen est disposé de manière à appliquer la tension d'écriture sous forme d'une tension pulsée.

**15.** Dispositif suivant l'une quelconque des revendications précédentes, comprenant en outre un moyen d'effacement de l'information enregistrée.

**16.** Dispositif suivant l'une quelconque des revendications 1 à 14, dans lequel le support d'enregistrement est capable de présenter une transition inverse du second état au premier état.

**17.** Dispositif suivant la revendication 16, comprenant en outre un moyen (108) d'effacement de l'information enregistrée en engendrant la transition d'état inverse.

**18.** Dispositif suivant la revendication 17, dans lequel le moyen d'effacement (108) est disposé de manière à appliquer une tension entre l'électrode-sonde et le support d'enregistrement pour engendrer la transition d'état inverse.

**19.** Dispositif suivant l'une quelconque des revendications précédentes, dans lequel le support d'enregistrement comprend un film capable de jouer par lui-même le rôle d'électrode.

**20.** Dispositif suivant l'une quelconque des revendications précédentes, dans lequel sont fournies plusieurs électrodes-sondes.

**21.** Dispositif suivant l'une quelconque des revendications précédentes, dans lequel le support d'enregistrement comprend un film monomoléculaire d'un composé organique ou un film formé de plusieurs couches monomoléculaires d'un composé organique.

**22.** Dispositif suivant la revendication 21, dans lequel le composé organique possède dans ses molécules un groupe ayant des niveaux électroniques pi.

**23.** Dispositif suivant la revendication 21, dans lequel le composé organique est un colorant.

**24.** Dispositif suivant la revendication 21, dans lequel le composé organique est choisi entre des colorants ayant un squelette porphyrine, des colorants à fonction azulène, des colorants à fonction cyanine, des colorants comprenant un groupe squarilium, des composés hétérocycliques condensés, des polymères de diacétylène, le tétraquinodiméthane, le tétrathiafluvalène et des complexes métalliques.

**25.** Dispositif suivant l'une quelconque des revendications 1 à 20, dans lequel le support d'enregistrement comprend un semiconducteur.

**26.** Dispositif suivant la revendication 25, dans lequel le semiconducteur est un semiconducteur amorphe formé d'un verre d'oxyde ou d'un verre au borate.

**27.** Dispositif suivant la revendication 26, dans lequel le semiconducteur est un verre à base de chalcogénure contenant au moins un élément des Groupes III, IV, V et VI du Tableau Périodique et au moins un élément choisi entre Se et Te, ou bien est un verre du type Ge-Sb-Se.

**28.** Dispositif suivant la revendication 25, dans lequel le semiconducteur est un film de silicium.

**29.** Dispositif suivant la revendication 28, dans lequel le film de silicium est un film de silicium amorphe.

**30.** Dispositif suivant la revendication 29, dans lequel le film de silicium amorphe est un stratifié p+/n/i ou un stratifié n+/p/i.

**31.** Dispositif suivant la revendication 25, dans lequel le semiconducteur est un semiconducteur organique.

**32.** Dispositif suivant la revendication 31, dans lequel le semiconducteur organique est un composé contenant un accepteur d'électrons et un métal.

**33.** Dispositif suivant la revendication 32, dans lequel l'accepteur d'électrons est choisi entre : le tétracyanoquinodiméthane, le tétracyanoéthylène, le tétrafluorotétracyanoquinodiméthane et le tétracyanonaphtoquinodiméthane.

**34.** Utilisation d'un dispositif suivant l'une quelconque des revendications 1 à 33 pour l'enregistrement d'une information en provoquant le passage d'un courant tunnel entre l'électrode-sonde (102) et le support d'enregistrement (101).

**35.** Utilisation d'un dispositif suivant l'une quelconque des revendications 1 à 33 pour la reproduction d'une information en provoquant le passage d'un courant tunnel entre l'électrode-sonde (102) et le support d'enregistrement (101).

**36.** Dispositif de reproduction, comprenant une électrode-sonde (102), un support d'enregistrement (101) ayant été soumis à une écriture par irradiation avec un faisceau d'énergie, ledit support étant capable de subir une transition entre au moins deux états qui possèdent des conductivités électriques distinctes et différentes, un moyen (108) d'application d'une tension sur ledit support d'enregistrement (101) à partir de ladite électrode-sonde (102) et un moyen (106) de lecture du courant passant à travers ledit support d'enregistrement (101).

**37.** Dispositif suivant la revendication 36, dans lequel le support d'enregistrement est formé d'une substance semiconductrice ayant une conductivité égale ou supérieure à $10^{-10}$ $(ohms.cm)^{-1}$.

**38.** Dispositif suivant la revendication 36, dans lequel le support d'enregistrement est formé d'une substance semiconductrice ayant une conductivité égale ou supérieure à $10^{-8}$ $(ohms.cm)^{-1}$.

**39.** Dispositif suivant la revendication 36 ou 37, dans lequel la substance semiconductrice contient au moins un élément choisi entre le Groupe IVB, le Groupe IIIB, le Groupe VB, le Groupe IIB et le Groupe VIB du Tableau Périodique des Eléments à période longue.

**40.** Dispositif suivant la revendication 39, dans lequel la substance semiconductrice contient au moins un élément ou composé choisi dans le groupe comprenant Si (silicium monocristallin, polycristallin ou amorphe), Ge, Ga, GaP, InAs, Inp, SdS, SdSe, ZnO et ZnS.

**41.** Dispositif suivant la revendication 36, dans lequel le support d'enregistrement comprend un film monomoléculaire d'un composé organique ou un film formé de couches monomoléculaires.

**42.** Dispositif suivant la revendication 41, dans lequel le composé organique possède un groupe ayant un niveau électronique pi dans la molécule.

**43.** Dispositif suivant la revendication 41, dans lequel le composé organique est un composé polycyclique aromatique, un composé polymérique ayant des liaisons pi conjuguées, un composé photochromique, un composé polypeptidique, un composé en association avec un colorant ou un complexe de transfert

d'électrons.

**44.** Dispositif suivant l'une quelconque des revendications 21 à 24 et 41 à 43, dans lequel le film monomoléculaire ou le film formé de couches monomoléculaires possède une épaisseur comprise dans l'intervalle de plusieurs Å à plusieurs milliers de Å.

**45.** Dispositif suivant l'une quelconque des revendications 21 à 24 et 41 à 44, dans lequel le film monomoléculaire ou le film formé de couches monomoléculaires possède une épaisseur comprise dans l'intervalle de plusieurs Å à 500 Å.

**46.** Dispositif suivant l'une quelconque des revendications 21 à 24 et 41 à 45, dans lequel le film monomoléculaire ou le film formé de couches monomoléculaires possède une épaisseur comprise dans l'intervalle de 10 Å à 200 Å.

**47.** Dispositif suivant l'une quelconque des revendications 21 à 24 et 41 à 46, dans lequel le film monomoléculaire ou le film formé de couches monomoléculaires a été formé par le procédé de Langmuir-Blodgett.

**48.** Dispositif suivant l'une quelconque des revendications 36 à 47, dans lequel l'information a été enregistrée au moyen d'un faisceau d'électrons, d'un faisceau ionique, d'un faisceau laser, d'un rayon X, d'un rayon UV ou de lumière visible.

**49.** Dispositif suivant l'une quelconque des revendications 36 à 48, dans lequel le support d'enregistrement (101) est disposé entre l'électrode-sonde (102) et une contre-électrode disposée en opposition de l'électrode-sonde.

**50.** Dispositif comprenant une électrode-sonde et un support d'enregistrement opposé à l'électrode-sonde de telle sorte qu'une tension d'écriture ou de lecture peut être appliquée entre cette électrode et ce support, caractérisé en ce que le support présente une transition d'un premier état à un second état de conductivité électrique différente de celle du premier état.

**51.** Dispositif suivant la revendication 50, présentant les caractéristiques suivant l'une quelconque des revendications 2, 3 et 20 à 33.

**52.** Dispositif suivant la revendication 50 ou 51, dans lequel le support d'enregistrement est apte à une transition inverse du second état au premier état.

**53.** Support de stockage d'informations à enregistrer et/ou reproduire par une électrode-sonde, caractérisé en ce qu'il présente une transition d'un premier état à un second état de conductivité électrique différente, transition qui peut être induite par une tension d'écriture ou détectée par une tension de lecture.

**54.** Support suivant la revendication 53, présentant les caractéristiques suivant l'une quelconque des revendications 2, 3 et 20 à 33.

**55.** Support suivant la revendication 53 ou 54, qui est apte à une transition inverse du second état au premier état.

**56.** Support suivant la revendication 53, 54 ou 55, ayant été soumis à un enregistrement d'une information qui peut être lue par une électrode-sonde d'un dispositif de balayage à effet tunnel.

**57.** Support suivant la revendication 56, ayant été soumis à un enregistrement d'une information au moyen d'une électrode-sonde d'un dispositif de balayage à effet tunnel.

**58.** Support suivant la revendication 56, ayant été soumis à un enregistrement d'une information par irradiation du support avec un faisceau de particules à haute énergie ou avec de la lumière.

Fig. 1

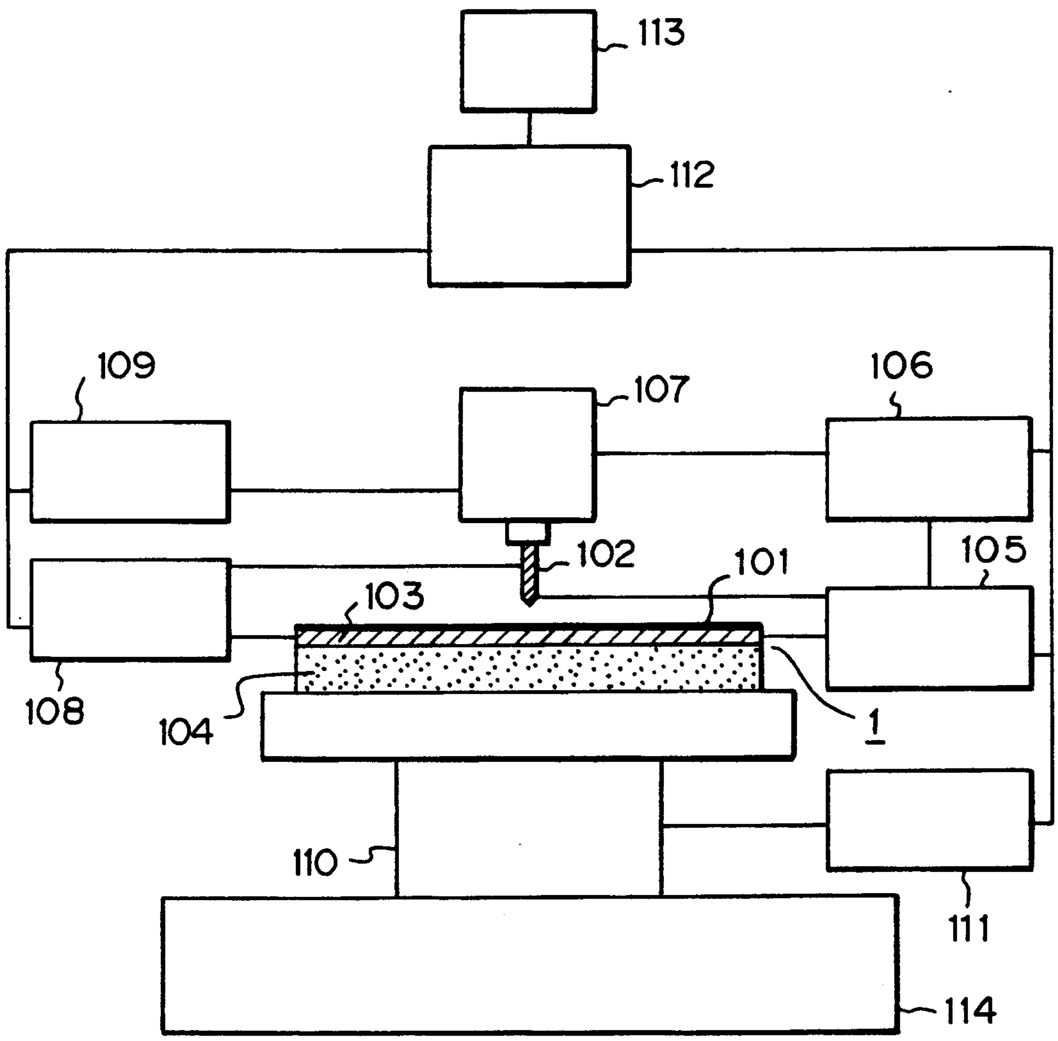

Fig. 2

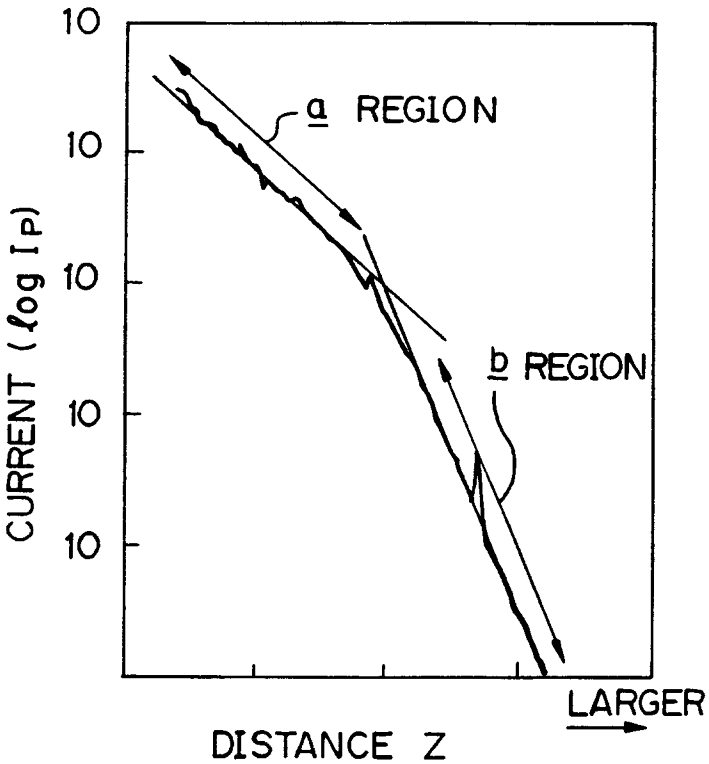
10
10
10
10
10
CURRENT ( ℓog I P)
a REGION
b REGION
DISTANCE Z
LARGER

Fig. 3

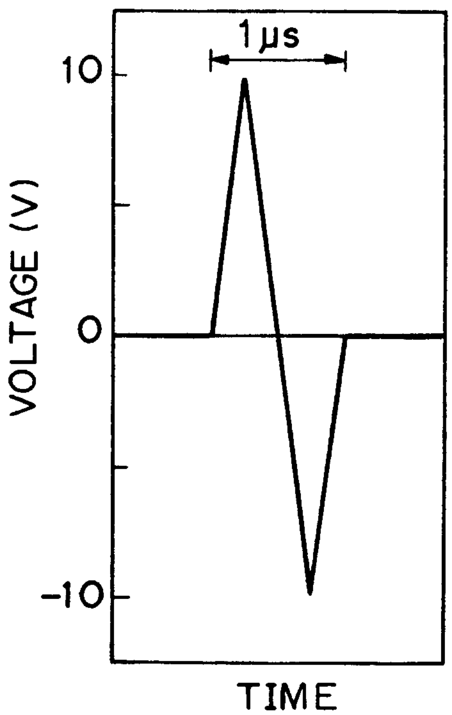
1 μs
10
0
-10
VOLTAGE (V)
TIME

Fig.4

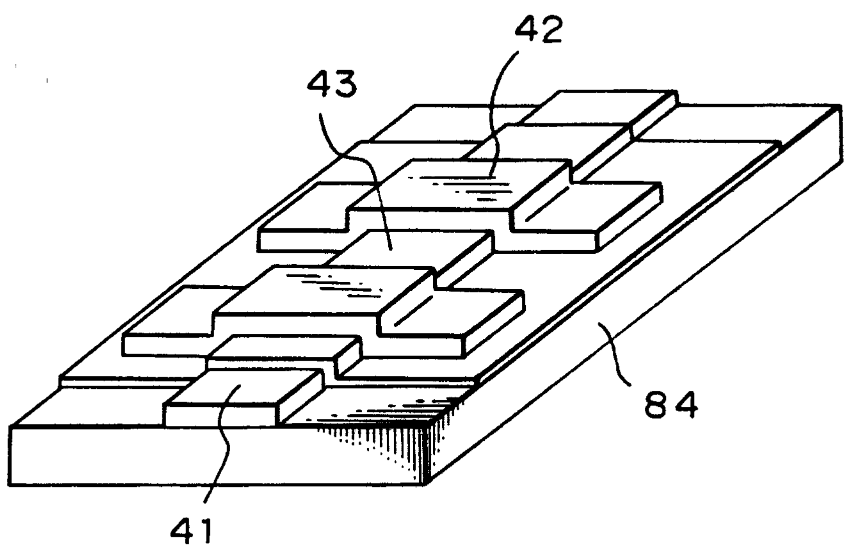


Fig. 5

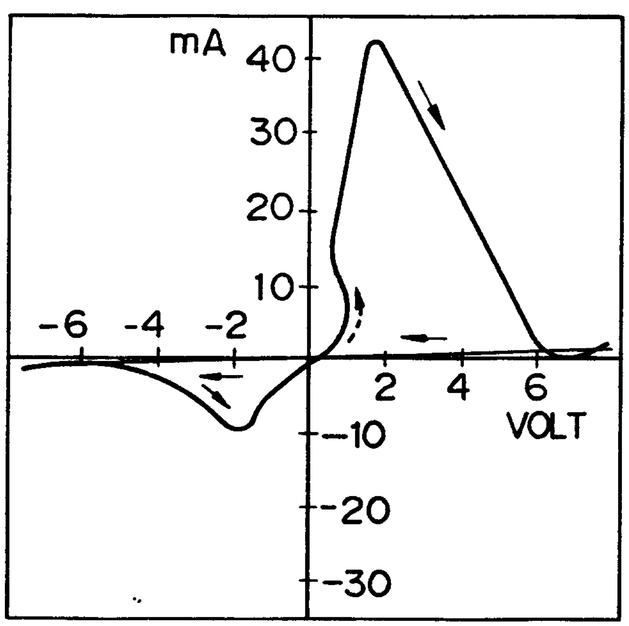

Fig. 6

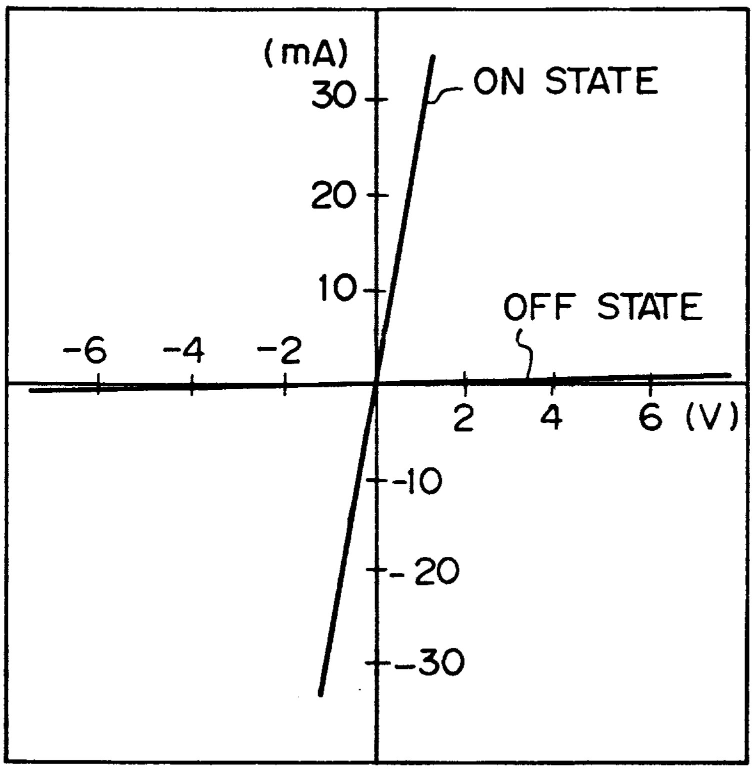

Fig. 7

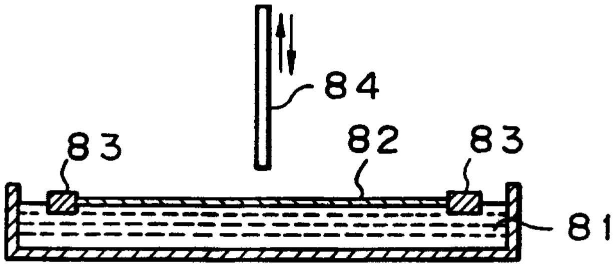


Fig. 8A

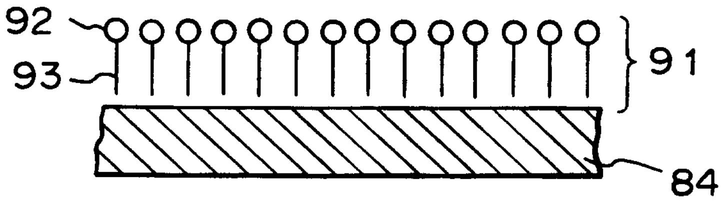


Fig. 8B

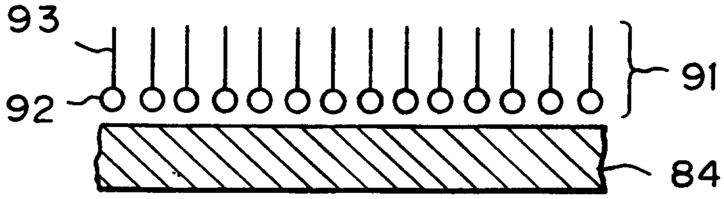

Fig. 9A

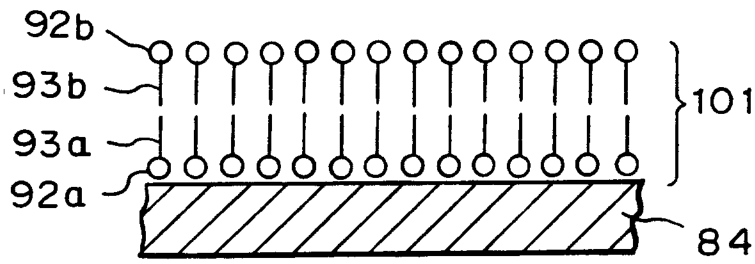


Fig. 9B

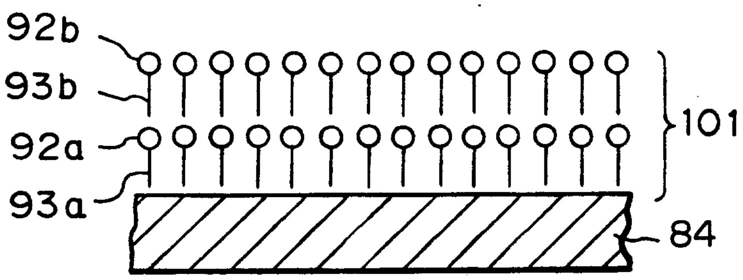


Fig. 9C

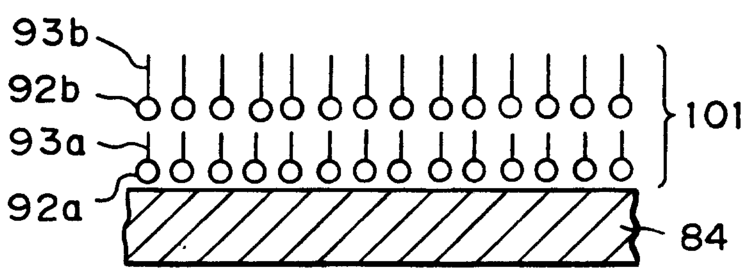

Fig. 10A

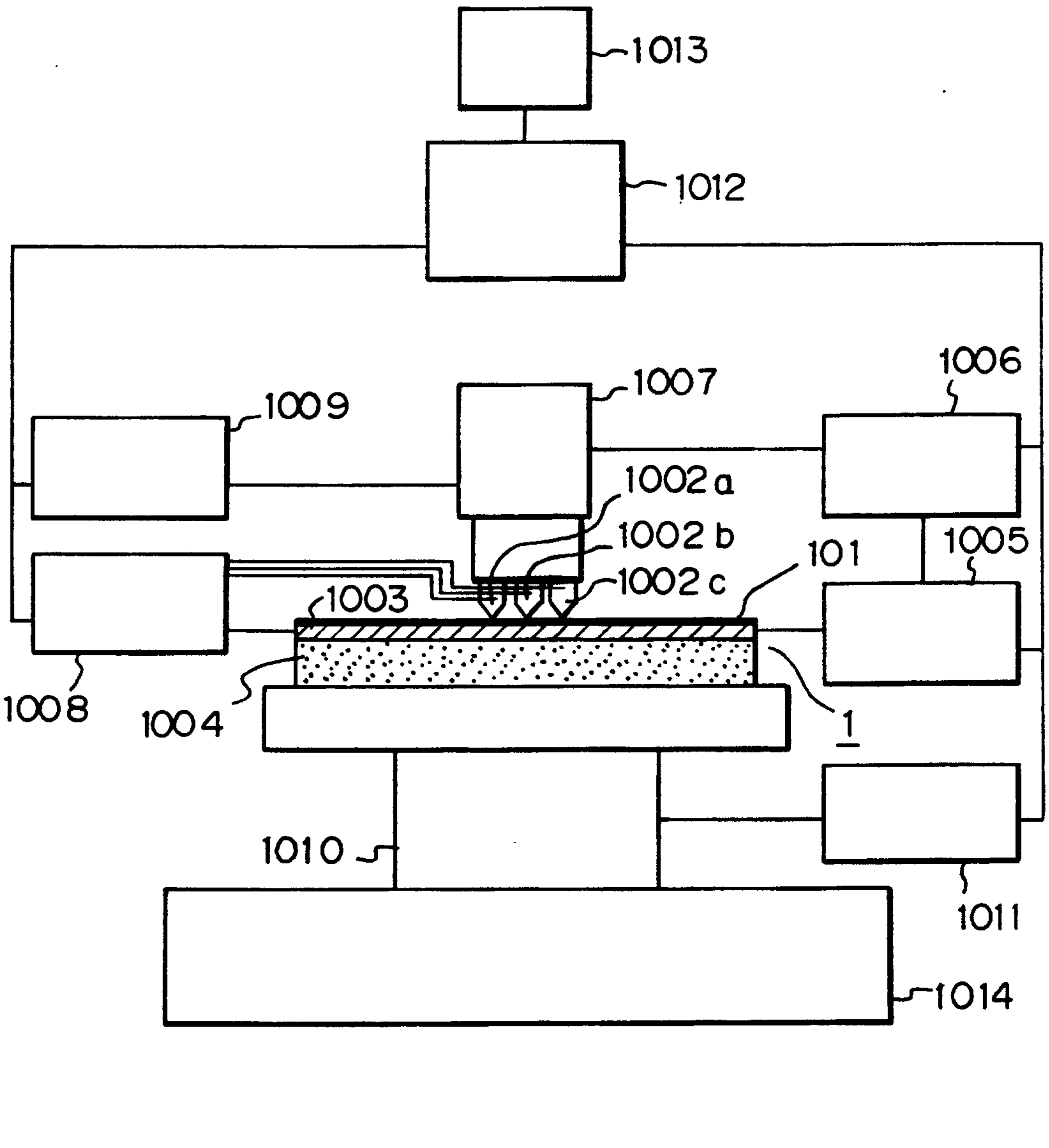
1013
1012
1009
1007
1006
1002a
1002b
1002c
101
1005
1003
1008
1004
1
1010
1011
1014

Fig. 10B

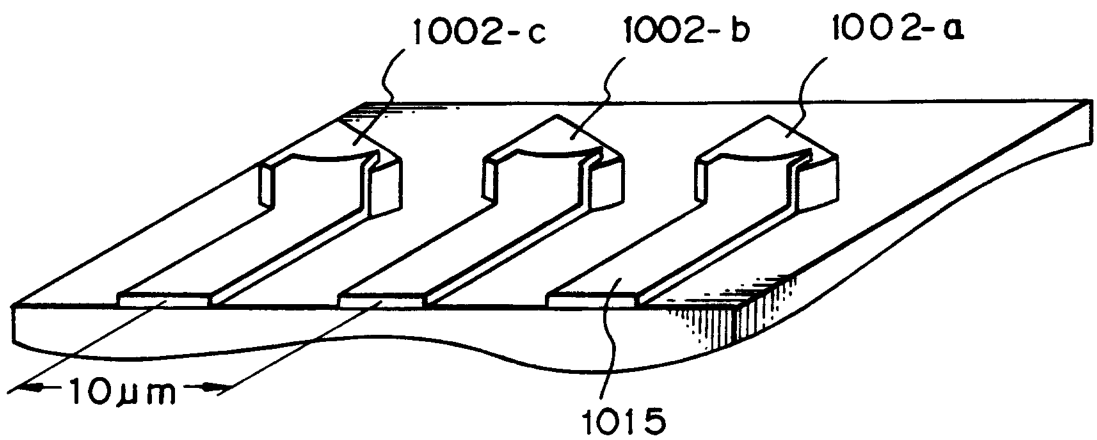


Fig. 10C

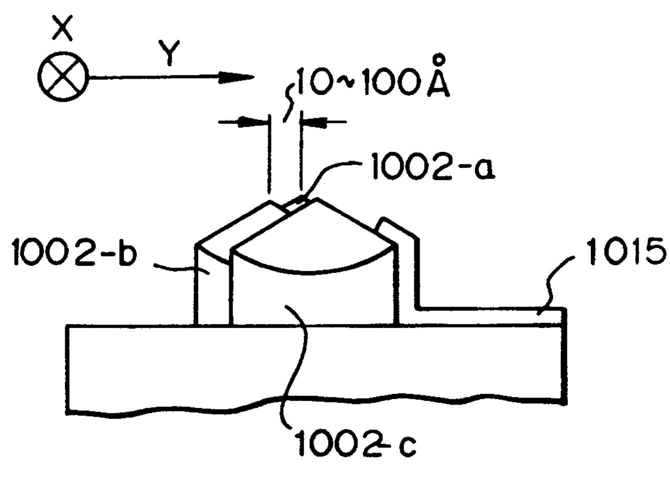

Fig. 10 D

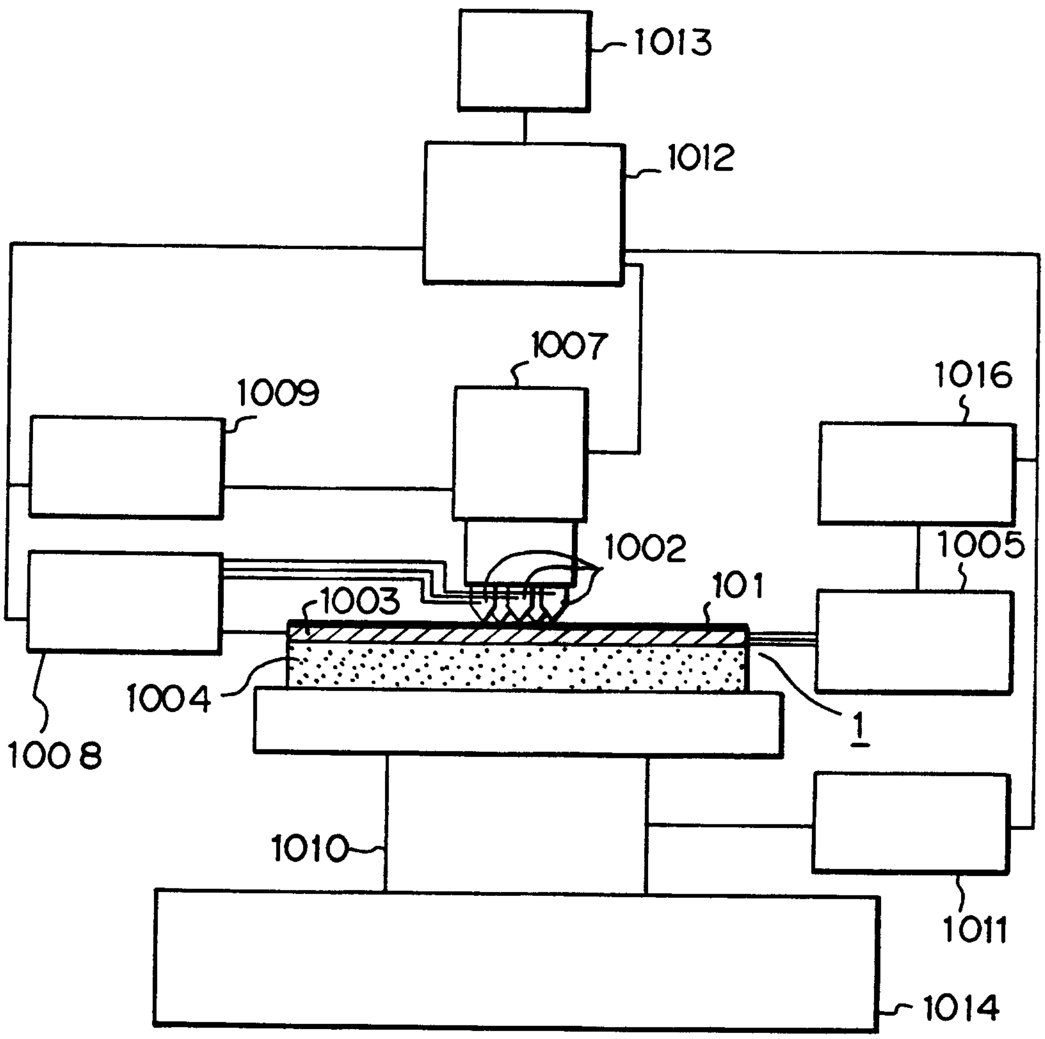
1013
1012
1007
1009
1016
1002
1005
101
1003
1004
1
1008
1010
1011
1014

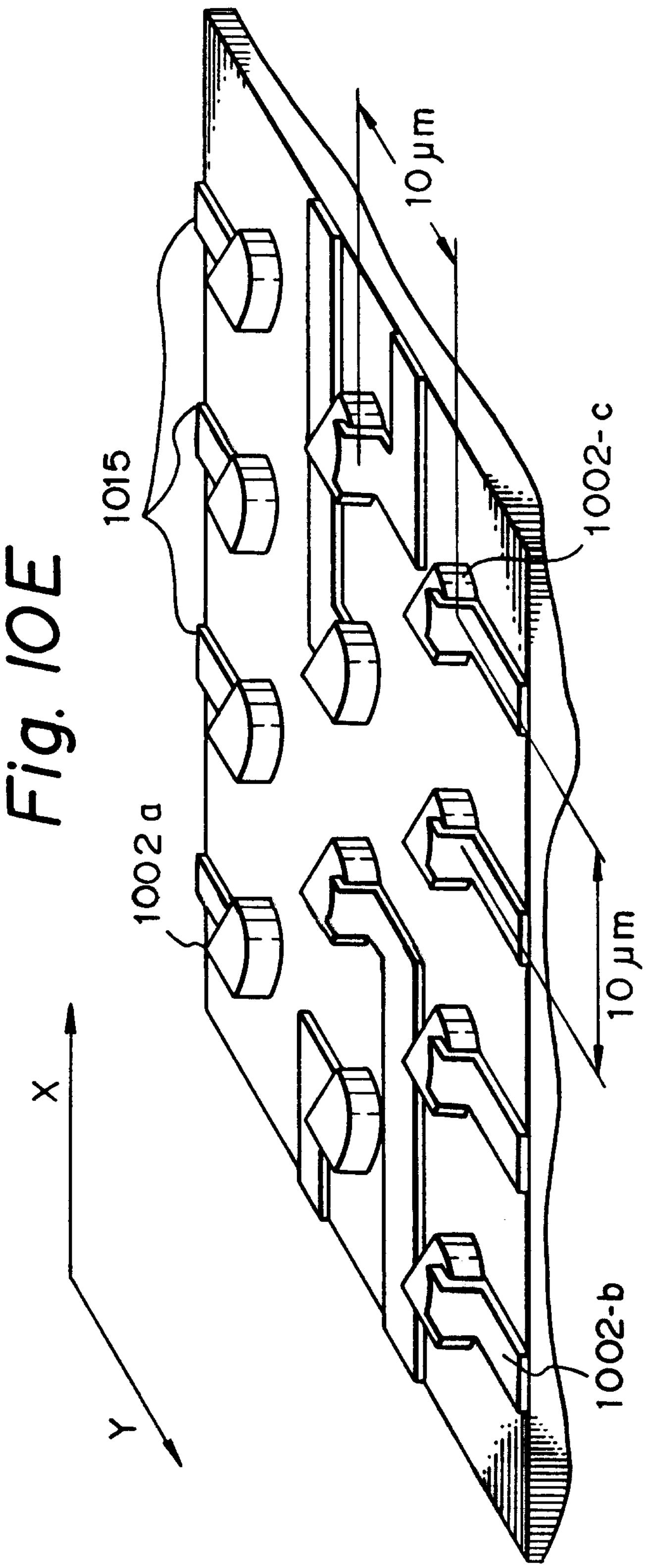


Fig. 10E

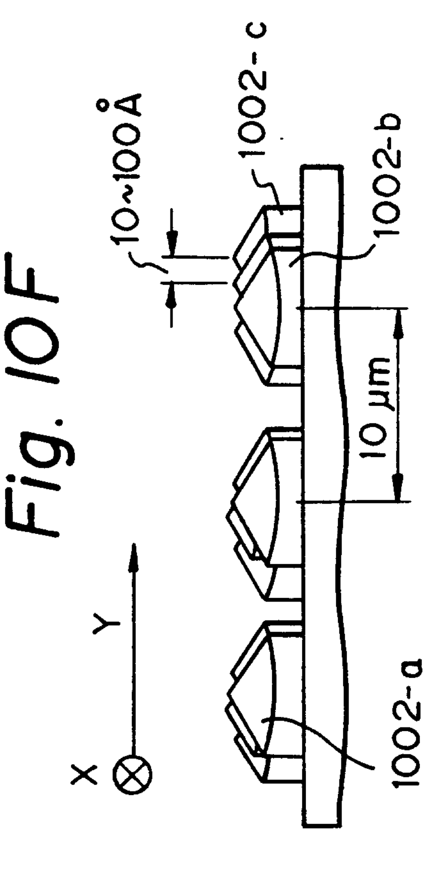


Fig. 10F

Fig. 11

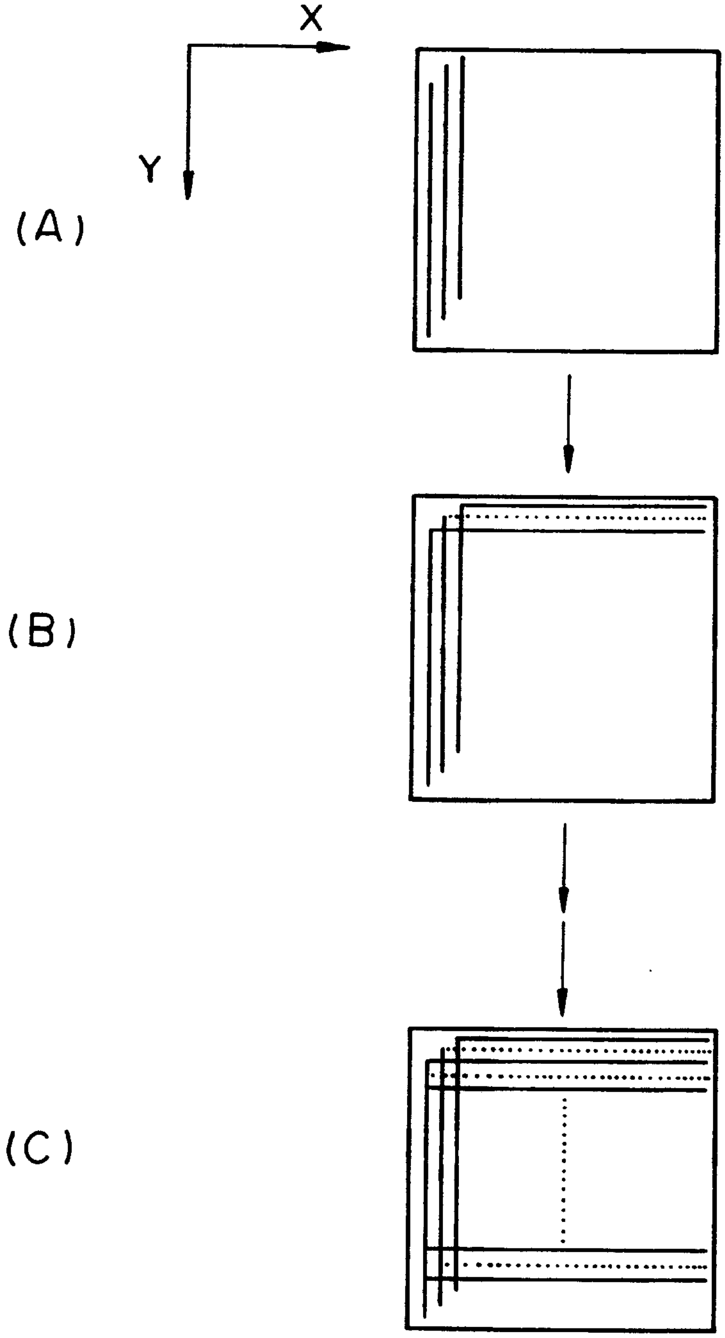

Fig. 12

(a)

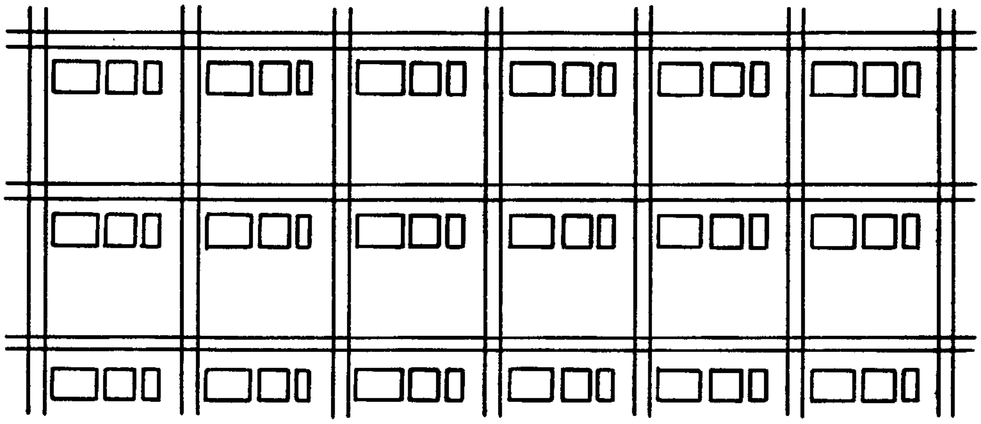

(b)